(19) Europäisches Patentamt
European Patent Office
Office européen des brevets

(11) EP 3 884 819 A1

(12) EUROPÄISCHE PATENTANMELDUNG

(43) Veröffentlichungstag:
29.09.2021 Patentblatt 2021/39

(51) Int Cl.:
A47J 36/32 (2006.01)     A47J 43/046 (2006.01)

(21) Anmeldenummer: 20165869.7

(22) Anmeldetag: 26.03.2020

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Vorwerk & Co. Interholding GmbH
42275 Wuppertal (DE)

(72) Erfinder:
• FRIELINGHAUS, Robert
44803 Bochum (DE)
• KRAUT-REINKOBER, Stefan
51375 Leverkusen (DE)

(74) Vertreter: Von Rohr Patentanwälte Partnerschaft mbB
Rüttenscheider Straße 62
45130 Essen (DE)

(54) VERFAHREN ZUM BETREIBEN EINES KÜCHENSYSTEMS, KÜCHENSYSTEM ZUR ZUBEREITUNG EINES LEBENSMITTELS UND COMPUTERPROGRAMMPRODUKT

(57) Es werden ein Verfahren zum Betreiben eines Küchensystems zur zumindest teilweise automatischen Zubereitung eines Lebensmittels, ein Küchensystem und ein Computerprogrammprodukt vorgeschlagen, wobei ein oder mehrere Zubereitungsparameter für ein oder mehrere Zubereitungsschritte und/oder ein oder mehrere für die Zubereitung zu verwendende Küchengeräte des Küchensystems automatisch und unter Verwendung eines Datenbanksystems festgelegt, angepasst und/oder ausgewählt werden bzw. wird.

Fig. 1

EP 3 884 819 A1

**Beschreibung**

Die vorliegende Erfindung betrifft ein Verfahren zum Betreiben eines Küchensystems gemäß dem Oberbegriff des Anspruchs 1, ein Küchensystem zur Zubereitung eines Lebensmittels gemäß dem Oberbegriff des Anspruchs 14 und ein Computerprogrammprodukt.

Aus dem Stand der Technik sind elektrisch betriebene Küchengeräte bekannt, die die Zubereitung eines Lebensmittels anhand eines elektrisch gespeicherten bzw. digitalen Rezepts zumindest teilweise automatisch ausführen. Beispielsweise kann ein Benutzer über eine Benutzerschnittstelle eines derartigen Küchengeräts ein Rezept aus einer Rezeptdatenbank auswählen. Anschließend wird der Benutzer durch die einzelnen Zubereitungsschritte geführt, wobei ein oder mehrere Zubereitungsschritte in Abhängigkeit vom Funktionsumfang des Küchengeräts zumindest teilweise automatisch von dem Küchengerät durchgeführt werden.

Der vorliegenden Erfindung liegt die Aufgabe zugrunde, ein verbessertes Verfahren zum Betreiben eines Küchensystems und ein verbessertes Küchensystem zur zumindest teilweise automatischen Zubereitung eines Lebensmittels anzugeben, wobei eine einfache, schnelle und/oder reproduzierbare Zubereitung bzw. Bearbeitung eines Lebensmittels ermöglicht oder unterstützt wird. Insbesondere soll mittels des Verfahrens und des Küchensystems eine einfache, schnelle, (teil-)automatische und/oder reproduzierbare Zubereitung bzw. Bearbeitung von Rezepten mit einer (individuell) angepassten Menge des Lebensmittels ermöglicht oder unterstützt werden.

Die der Erfindung zugrunde liegende Aufgabe wird durch ein Verfahren gemäß Anspruch 1, ein Küchensystem gemäß Anspruch 14 oder ein Computerprogrammprodukt gemäß Anspruch 15 gelöst. Vorteilhafte Weiterbildungen sind Gegenstand der Unteransprüche.

Das vorschlagsgemäße Küchensystem weist ein oder mehrere Küchengeräte zur Zubereitung bzw. Verarbeitung eines Lebensmittels auf. Insbesondere ist das vorschlagsgemäße Küchensystem dazu ausgebildet, mittels eines oder mehrerer Küchengeräte ein oder mehrere Lebensmittel/Zutaten zu einer Speise und/oder einem Gericht zuzubereiten bzw. zu verarbeiten.

Ein Küchengerät im Sinne der vorliegenden Erfindung ist eine Vorrichtung zur Zubereitung von Speisen/Gerichten bzw. zur Bearbeitung, insbesondere zum Erhitzen, Zerkleinern und/oder Mischen/Rühren, von Lebensmitteln/Zutaten. Beispielsweise kann ein Küchengerät im Sinne der vorliegenden Erfindung ein Herd, ein Backofen, eine Mikrowelle, ein Kühlschrank, ein Wasserkocher, ein Grill, ein Toaster, ein Kochtopf, eine Pfanne, ein Behälter, eine Schale, eine Form, ein Blech o. dgl. sein.

Vorzugsweise ist mindestens ein Küchengerät des Küchensystems als Küchenmaschine zur zumindest teilweise automatischen Zubereitung bzw. Bearbeitung, insbesondere zum Erhitzen, Zerkleinern und/oder Mischen/Rühren, eines Lebensmittels ausgebildet.

Eine Küchenmaschine im Sinne der vorliegenden Erfindung ist ein elektrisch betriebenes, insbesondere multifunktionales, Küchengerät, das ein oder mehrere Zubereitungsfunktionen, wie ein Erhitzen, Zerkleinern und/oder Mischen/Rühren eines Lebensmittels, aufweist. Zu diesem Zweck kann eine Küchenmaschine mit einem optionalen Gefäß für das Lebensmittel, einem elektrischen Heizsystem zum Erhitzen des Lebensmittels und/oder einem Rührer zum Umrühren/Mischen und/oder Zerkleinern des Lebensmittels ausgestattet sein.

Eine Küchenmaschine im Sinne der vorliegenden Erfindung kann jedoch auch ein sonstiges elektrisch betriebenes Küchengerät zur Zubereitung bzw. Bearbeitung, insbesondere zum Erhitzen, von Lebensmitteln sein, wie ein Herd, ein Backofen und/oder eine Mikrowelle.

Ein Lebensmittel im Sinne der vorliegenden Erfindung ist vorzugsweise ein Nahrungsmittel und/oder ein Genussmittel für den Verzehr. Lebensmittel können beispielsweise Produkte pflanzlichen Ursprungs, wie Gemüse, Obst und/oder ein Getreidetrockenprodukt, und/oder Produkte tierischen Ursprungs, wie Eier, Fleischwaren und/oder Milchprodukte, sein.

Ein Lebensmittel im Sinne der vorliegenden Erfindung kann ein Anfangs-, Zwischen- und/oder Endprodukt für den Verzehr bzw. für eine Speise und/oder ein Gericht sein. Insbesondere kann ein Lebensmittel im Sinne der vorliegenden Erfindung eine Zutat für eine Speise und/oder ein Gericht bilden und/oder selbst durch mehrere Lebensmittel gebildet sein.

Das vorschlagsgemäße Küchensystem, insbesondere die Küchenmaschine des Küchensystems, weist vorzugsweise eine Benutzerschnittstelle, eine Datenverarbeitungseinrichtung und eine Steuereinrichtung auf.

Die Datenverarbeitungseinrichtung ist vorzugsweise mit einer (digitalen) Rezeptdatenbank mit einem oder mehreren (digitalen) Rezepten, einer (digitalen) Lebensmitteldatenbank mit mindestens einem Lebensmittelparameter für ein oder mehrere Lebensmittel und/oder einer (digitalen) Gerätedatenbank mit mindestens einem Geräteparameter für mehrere Küchengeräte (datentechnisch) verbunden oder verbindbar.

Zusätzlich oder alternativ kann das Küchensystem bzw. die Küchenmaschine, insbesondere ein Speicher der Datenverarbeitungseinrichtung, die oder eine zusätzliche Rezeptdatenbank, Lebensmitteldatenbank und/oder Gerätedatenbank aufweisen.

Über die Benutzerschnittstelle kann ein Benutzer ein Rezept der Rezeptdatenbank auswählen, das mittels des Küchensystems ausgeführt bzw. zubereitet werden soll.

Eine Datenbank im Sinne der vorliegenden Erfindung ist vorzugsweise eine (digitale) Sammlung von Daten und/oder von Datensätzen mit mehreren Daten. Besonders bevorzugt ist eine Datenbank im Sinne der vorliegenden Erfindung als relationale und/oder tabellenbasierte Datenbank ausgebildet. Insbesondere umfasst eine Datenbank im Sinne der vorliegenden Erfindung mindestens eine Tabelle oder eine (digitale) Sammlung von Tabellen, insbesondere wobei die Zeilen der Tabelle jeweils einen Datensatz und die Spalten der Tabelle jeweils mindestens ein Attribut beinhalten.

Vorzugweise sind/ist die Rezeptdatenbank, die Lebensmitteldatenbank und/oder die Gerätedatenbank als relationale und/oder tabellenbasierte Datenbank ausgebildet und/oder in dem (gemeinsamen) Datenbanksystem enthalten.

Wie bereits erläutert, weist die Rezeptdatenbank vorzugsweise mehrere Rezepte auf.

Ein Rezept im Sinne der vorliegenden Erfindung ist vorzugsweise eine programmatische und/oder digitale Anweisung zur Zubereitung bzw. Bearbeitung eines Lebensmittels mittels des Küchensystems bzw. der Küchenmaschine, insbesondere um eine Speise und/oder ein Gericht und/oder Bestandteile davon zuzubereiten.

Vorzugsweise beinhaltet ein Rezept im Sinne der vorliegenden Erfindung ein oder mehrere (sequentielle) Zubereitungsschritte, wobei jeder Zubereitungsschritt eine oder mehrere Angaben, Informationen, Werte, Kenngrößen und/oder Parameter betreffend ein zu verwendendes Lebensmittel sowie eine oder mehrere Angaben, Informationen, Werte, Kenngrößen und/oder Parameter betreffend ein zu verwendendes Küchengerät und/oder eine durchzuführende Handlung, im Folgenden Zubereitungsparameter genannt, umfasst. Beispielsweise kann ein Zubereitungsschritt eine (vorgegebene) Angabe zu der Menge des zu verwendenden Lebensmittels, im Folgenden rezeptgemäße Menge genannt, und als (ersten) Zubereitungsparameter eine einzustellende Temperatur eines Küchengeräts und als (zweiten) Zubereitungsparameter eine Zeit umfassen, für die die Menge des Lebensmittels der Temperatur ausgesetzt werden soll.

Ein Zubereitungsparameter im Sinne der vorliegenden Erfindung kann ausgewählt sein aus einer Zeit, insbesondere einer Heizzeit, einer Kühlzeit, einer Zerkleinerungszeit oder einer Mixzeit, aus einer Temperatur, insbesondere einer Heiztemperatur oder Kühltemperatur, aus einem Druck, aus einer Drehzahl, insbesondere eines Elektromotors, und/oder aus einer Leistung, insbesondere einer Heizleistung oder Kühlleistung.

Besonders bevorzugt ist ein Rezept im Sinne der vorliegenden Erfindung tabellarisch aufgebaut bzw. als (digitale) Tabelle ausgebildet, insbesondere wobei jede Zeile bzw. jeder Datensatz mindestens oder genau einen Zubereitungsschritt beinhaltet bzw. Angaben zu einem Zubereitungsschritt enthält. Insbesondere sind in einem Rezept jedem Zubereitungsschritt eine oder mehrere Angaben, Informationen, Werte, Kenngrößen und/oder Parameter betreffend ein zu verwendendes Lebensmittel, ein oder mehrere zu verwendende Küchengeräte und/oder eine oder mehrere durchzuführende Handlungen und/oder ein oder mehrere Zubereitungsparameter - vorzugsweise tabellarisch - zugeordnet.

Die Steuereinrichtung des Küchensystems, insbesondere der Küchenmaschine, ist dazu ausgebildet, das Rezept bzw. die Zubereitung eines Lebensmittels und/oder einzelne, mehrere oder alle Zubereitungsschritte anhand des Rezepts, insbesondere des oder der im Rezept genannten Zubereitungsparameter, zumindest teilweise automatisch auszuführen, insbesondere durch Ansteuern eines Elektromotors bzw. Rührers und/oder eines Heizsystems des Küchensystems, insbesondere der Küchenmaschine.

Die Lebensmitteldatenbank umfasst vorzugsweise ein bzw. eine oder mehrere Angaben, Informationen, Werte, Kenngrößen und/oder Parameter für ein oder mehrere Lebensmittel, im Folgenden Lebensmittelparameter genannt. Insbesondere sind in der Lebensmitteldatenbank ein oder mehrere Lebensmittelparameter einem oder mehreren Lebensmitteln bzw. Lebensmittelidentifikatoren - vorzugsweise tabellarisch - zugeordnet.

Ein Lebensmittelparameter im Sinne der vorliegenden Erfindung kann ein physikalischer Wert, ein physiologischer Wert, eine (Schüttgut-)Dichte, eine Härte, eine Elastizität, eine Schmelztemperatur, eine Siedetemperatur, eine spezifische Wärmekapazität, eine spezifische Verdampfungsenthalpie, eine Wärmeleitfähigkeit, eine Löslichkeit, ein Nährwert, ein Stärke-, Zucker-, Nährstoff- und/oder Wassergehalt, ein Quellungsgrad, eine Zerkleinerungsfähigkeit, eine Teilbarkeit oder ein sonstiges Charakteristikum des zugeordneten Lebensmittels sein.

Die Gerätedatenbank umfasst vorzugsweise ein bzw. eine oder mehrere Angaben, Informationen, Werte, Kenngrößen und/oder Parameter für ein oder mehrere Küchengeräte des Küchensystems, im Folgenden Geräteparameter genannt. Insbesondere sind in der Gerätedatenbank ein oder mehrere Geräteparameter einem oder mehreren Küchengeräten bzw. Geräteidentifikatoren - vorzugsweise tabellarisch - zugeordnet.

Ein Geräteparameter kann eine technische Funktion/Fähigkeit, wie eine Heizfunktion, eine Kühlfunktion, eine Zerkleinerungsfunktion und/oder eine Rühr- bzw. Mischfunktion, und/oder eine technische Eigenschaft, eine (lebensmittelspezifische) Leistung, eine (lebensmittelspezifische) Temperatur, ein Temperaturbereich, eine Maximaltemperatur, eine (lebensmittelspezifische) Drehzahl, ein Drehzahlbereich, eine Maximaldrehzahl, ein Drehmoment, ein Fassungsvermögen, eine (lebensmittelspezifische) Höchstmenge, eine Siebgröße o. dgl. des zugeordneten Küchengeräts sein.

Das vorschlagsgemäße Verfahren wird vorzugsweise mittels des vorschlagsgemäßen Küchensystems, insbesondere der Küchenmaschine des Küchensystems, durchgeführt.

Bei dem Verfahren ist vorgesehen, ein (digitales) Datenbanksystem einzusetzen bzw. darauf zuzugreifen, wobei das Datenbanksystem eine (digitale) Rezeptdatenbank mit mehreren (digitalen) Rezepten zur Bearbeitung bzw. Zubereitung eines Lebensmittels umfasst, wobei die Rezepte der Rezeptdatenbank jeweils mindestens eine (voreingestellte) Mengenangabe bzw. eine Angabe zu der für die Zubereitung zu verwendenden bzw. rezeptgemäßen Menge des Lebensmittels und mindestens einen Zubereitungsparameter für einen oder mehrere Zubereitungsschritte enthält, wie eine Heizzeit, eine Zerkleinerungszeit und/oder eine Mixzeit.

Die in dem Rezept angegebene/voreingestellte bzw. für die Zubereitung zu verwendende Menge wird im Folgenden stets rezeptgemäße Menge genannt.

Eine Menge im Sinne der vorliegenden Erfindung ist vorzugsweise die Masse insbesondere in [kg], das Volumen insbesondere in [m$^3$] oder [l], die Länge insbesondere in [cm] und/oder die Anzahl eines Lebensmittels. Vorzugsweise ist bzw. wird die (rezeptgemäße) Menge eines Lebensmittels - insbesondere in dem Rezept und/oder über die Benutzerschnittstelle - als Küchenmaß, insbesondere Gewichtsmaß, Hohlmaß, Zählmaß, Längenmaß und/oder durch eine Besteckangabe, wie eine Angabe zu einem Esslöffel, einem Teelöffel und/oder einer Messerspitze mit dem Lebensmittel, angegeben bzw. angezeigt.

Anhand einer Benutzereingabe bzw. über die Benutzerschnittstelle des Küchensystems, insbesondere der Küchenmaschine, wird ein Rezept aus der Rezeptdatenbank ausgewählt. Insbesondere unmittelbar anschließend wird anhand der oder einer weiteren Benutzereingabe bzw. über die Benutzerschnittstelle die rezeptgemäße Menge des Lebensmittels - vorzugsweise automatisch/selbsttätig und/oder stufenlos - skaliert, insbesondere mittels der Datenverarbeitungseinrichtung und/oder um eine angepasste/skalierte Menge des Lebensmittels zu erhalten. Beispielsweise kann ein Benutzer über die Benutzerschnittstelle eine Portions- bzw. Personenanzahl angeben, für die das ausgewählte Rezept durchgeführt werden soll. Die Datenverarbeitungseinrichtung kann anhand der Portions- bzw. Personenzahl die rezeptgemäße Menge skalieren bzw. die skalierte Menge bestimmen.

Unter dem Begriff "Skalierung" im Sinne der vorliegenden Erfindung ist vorzugsweise eine - insbesondere automatische, stufenlose und/oder mengenmäßige - Anpassung der rezeptgemäßen Menge des Lebensmittels oder der Lebensmittel zu verstehen, insbesondere aufgrund einer vorgenommenen Benutzereingabe und/oder um die Menge der zuzubereitenden Speise oder des zuzubereitenden Gerichts zu verändern und/oder um eine skalierte/angepasste Menge zu bestimmen.

Gemäß einer ersten Verfahrensvariante des vorschlagsgemäßen Verfahrens umfasst das Datenbanksystem - zusätzlich zur Rezeptdatenbank - eine (digitale) Lebensmitteldatenbank mit mindestens einem Lebensmittelparameter für das Lebensmittel, wie eine spezifische Wärmekapazität, eine spezifische Verdampfungsenthalpie bzw. eine Verdampfungsrate, einen Zerkleinerungsfaktor zur Festlegung bzw. Anpassung der Zerkleinerungszeit und/oder einen Mixfaktor zur Festlegung bzw. Anpassung einer Mixzeit.

In Abhängigkeit von der skalierten Menge des Lebensmittels und unter Verwendung der Lebensmitteldatenbank bzw. des Lebensmittelparameters wird automatisch, insbesondere ohne zusätzliche Eingaben durch einen Benutzer und/oder (ausschließlich) mittels der Datenverarbeitungseinrichtung, der Zubereitungsparameter festgelegt bzw. angepasst. Beispielsweise kann mittels der spezifischen Wärmekapazität des Lebensmittels die (benötigte) Heizzeit auf eine (Ziel-)Temperatur, mittels der spezifischen Verdampfungsenthalpie die Verdampfungsrate, mittels des Zerkleinerungsfaktors die (benötigte) Zerkleinerungszeit und/oder mittels des Mixfaktors die (benötigte) Mixzeit der skalierten Menge festgelegt/ermittelt bzw. angepasst werden.

Auf diese Weise wird eine gleichbleibende Qualität des Zubereitungsergebnisses auch bei einem skalierten Rezept bzw. einer skalierten Menge gewährleistet. Insbesondere wird die Flexibilität des Küchensystems erhöht und/oder werden einzelne Zubereitungsschritte (voll)automatisch an eine Mengenveränderung angepasst, vorzugsweise ohne dass einzelne Zubereitungsparameter manuell festgelegt bzw. angepasst werden müssen.

Gemäß einer zweiten, auch unabhängig realisierbaren Verfahrensvariante, die auch in Kombination mit der ersten Verfahrensvariante durchgeführt werden kann, umfasst das Datenbanksystem - insbesondere zusätzlich zur Rezeptdatenbank und/oder Lebensmitteldatenbank - eine (digitale) Gerätedatenbank mit mindestens einem (gerätespezifischen) Geräteparameter für mehrere Küchengeräte.

Der Geräteparameter kann eine technische und/oder lebensmittelspezifische Funktion/Fähigkeit des Küchengeräts, beispielsweise eine Heizfunktion, eine Kühlfunktion, eine Misch- bzw. Rührfunktion und/oder eine Zerkleinerungsfunktion, und/oder eine technische und/oder lebensmittelspezifische Eigenschaft, eine (lebensmittelspezifische) Leistung, eine (lebensmittelspezifische) Temperatur, ein (lebensmittelspezifischer) Temperaturbereich, ein Fassungsvermögen und/oder eine (lebensmittelspezifische) Höchstmenge des Küchengeräts sein.

In Abhängigkeit von der Skalierung bzw. skalierten Menge des Lebensmittels und unter Verwendung der Gerätedatenbank bzw. des Geräteparameters, insbesondere des Fassungsvermögens und/oder der (lebensmittelspezifischen) Höchstmenge als Geräteparameter, wird automatisch - insbesondere ohne zusätzliche Eingaben durch einen Benutzer und/oder (ausschließlich) mittels der Datenverarbeitungseinrichtung - ein für die Zubereitung bzw. einen Zubereitungsschritt zu verwendendes Küchengerät festgelegt bzw. ausgewählt, insbesondere indem das Fassungsvermögen bzw. die Höchstmenge der Küchengeräte (systematisch) mit der skalierten Menge des Lebensmittels verglichen wird.

Insbesondere wird automatisch ein Küchengerät aus der Gerätedatenbank ausgewählt, das den für den Zubereitungsschritt erforderlichen Geräteparameter, wie ein ausreichend großes Fassungsvermögen und/oder eine ausreichend große Höchstmenge für die skalierte Menge, aufweist.

Ganz besonders bevorzugt wird automatisch das kleinstmögliche Küchengerät ausgewählt bzw. das Küchengerät mit dem kleinsten Fassungsvermögen ausgewählt, das für die Zubereitung der skalierten Menge noch ausreicht.

Optional wird bei der Festlegung bzw. Auswahl des zu verwendenden Küchengeräts - zusätzlich zur Gerätedatenbank bzw. zum Geräteparameter - die Lebensmitteldatenbank bzw. ein Lebensmittelparameter der Lebensmitteldatenbank, insbesondere die (Schüttgut-)Dichte, ein Stärke- und/oder Zuckergehalt und/oder ein Quellungsgrad, verwendet, insbesondere um zusammen mit dem Fassungsvermögen als Geräteparameter die lebensmittelspezifische Höchstmenge des Küchengeräts zu bestimmen.

Auf diese Weise wird die Flexibilität des Küchensystems erhöht und/oder die Anzahl und/oder der Einsatz der verwendeten Küchengeräte insbesondere (voll)automatisch an eine Mengenveränderung angepasst bzw. optimiert.

Darüber hinaus ist es mittels des vorschlagsgemäßen Verfahrens möglich, systembedingte Größenbegrenzungen durch Auslagern und/oder Verteilen von einem oder mehreren Zubereitungsschritten auf andere und/oder weitere Küchengeräte zu umgehen bzw. aufzulösen und/oder größere Mengen des Lebensmittels zuzubereiten, insbesondere ohne dass einzelne oder mehrere Zubereitungsschritte mehrfach durchgeführt werden müssen. Auf diese Wiese können die Zubereitungszeiten und der Ressourcenaufwand, insbesondere der Energieverbrauch, reduziert oder minimiert werden.

Vorzugsweise ist in dem Rezept ein Küchengerät voreingestellt bzw. enthält das Rezept eine Angabe zu dem für einen Zubereitungsschritt zu verwendenden Küchengerät. Im Folgenden wird das im Rezept angegebene/voreingestellte bzw. für einen Zubereitungsschritt zu verwendende Küchengerät stets rezeptgemäßes Küchengerät genannt.

In Abhängigkeit von der skalierten bzw. angepassten Menge des Lebensmittels und unter Verwendung des Geräteparameters, insbesondere des Fassungsvermögens, wird automatisch - insbesondere ohne zusätzliche Eingaben durch einen Benutzer und/oder (ausschließlich) mittels der Datenverarbeitungseinrichtung - überprüft, ob ein alternatives oder zusätzliches Küchengerät des Küchensystems zu dem rezeptgemäßen Küchengerät zu verwenden ist, insbesondere um die Zubereitungszeit und/oder den Energieverbrauch der Zubereitung zu reduzieren.

Im Fall einer Mengenreduktion wird vorzugsweise überprüft, ob ein kleineres Küchengerät als das rezeptgemäße Küchengerät vorhanden bzw. verwendbar und/oder zu verwenden ist, insbesondere durch einen (systematischen) Vergleich der skalierten Menge mit dem Fassungsvermögen und/oder der Höchstmenge der Küchengeräte.

Vorzugsweise wird im Fall einer Mengenerhöhung überprüft, ob das rezeptgemäße Küchengerät weiterhin verwendet werden kann oder ein größeres Küchengerät als das rezeptgemäße Küchengerät oder ein zusätzliches Küchengerät zu dem rezeptgemäßen Küchengerät vorhanden bzw. verwendbar und/oder zu verwenden ist, insbesondere durch einen (systematischen) Vergleich der skalierten Menge mit dem Fassungsvermögen der Küchengeräte.

Die Festlegung bzw. Anpassung erfolgt vorzugsweise für jeden Zubereitungsschritt, bei dem ein Küchengerät verwendet wird.

Im Anschluss an die automatische Festlegung bzw. Anpassung des Zubereitungsparameters und/oder des Küchengeräts, insbesondere für alle Zubereitungsschritte des ausgewählten Rezepts, wird die Zubereitung bzw. das Rezept vorzugsweise mittels des Küchensystems, insbesondere der Steuereinrichtung des Küchensystems, zumindest teilweise automatisch ausgeführt, insbesondere unter Berücksichtigung des festgelegten bzw. angepassten Zubereitungsparameters.

Ein weiterer, auch unabhängig realisierbarer Aspekt der vorliegenden Erfindung betrifft ein Computerprogrammprodukt, das Befehle umfasst, die bei der Ausführung des Programms des Computerprogrammprodukts durch eine Datenverarbeitungseinrichtung des Küchensystems, insbesondere der Küchenmaschine, die Datenverarbeitungseinrichtung dazu veranlasst, das vorschlagsgemäße Verfahren und/oder einen oder mehrere Verfahrensschritte des vorschlagsgemäßen Verfahrens durchzuführen. Insbesondere umfasst die Datenverarbeitungseinrichtung eine Recheneinheit zum Ausführen des Programms des Computerprogrammprodukts und/oder einen Speicher, auf dem das Programm des Computerprogrammprodukts (elektronisch) gespeichert ist. Auf diese Weise werden entsprechende Vorteile realisiert.

Die vorgenannten Aspekte, Merkmale und Verfahrensschritte bzw. -varianten der vorliegenden Erfindung sowie die sich aus den Ansprüchen und der nachfolgenden Beschreibung ergebenden Aspekte, Merkmale und Verfahrensschritte bzw. -varianten der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:

Fig. 1     eine schematische Seitenansicht einer vorschlagsgemäßen Küchenmaschine;

Fig. 2     eine schematische Ansicht eines vorschlagsgemäßen Küchensystems mit der Küchenmaschine gemäß Fig.

1, weiteren Küchengeräten und einem Datenbanksystem;

Fig. 3    ein schematisches Ablaufdiagramm eines vorschlagsgemäßen Verfahrens zum Betreiben des Küchensystems;

Fig. 4    ein schematisches Diagramm mit einem exemplarischen Verlauf der Temperatur eines Lebensmittels beim Erhitzen des Lebensmittels in Abhängigkeit von der Zeit;

Fig. 5    ein schematisches Diagramm mit einem exemplarischen Verlauf der skalierten Menge eines Lebensmittels in Abhängigkeit von einem Skalierungsfaktor; und

Fig. 6    einen schematischen Verlauf der Zeit zur Zerkleinerung eines Lebensmittels in Abhängigkeit der Menge.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden, auch wenn von einer wiederholten Beschreibung abgesehen wird.

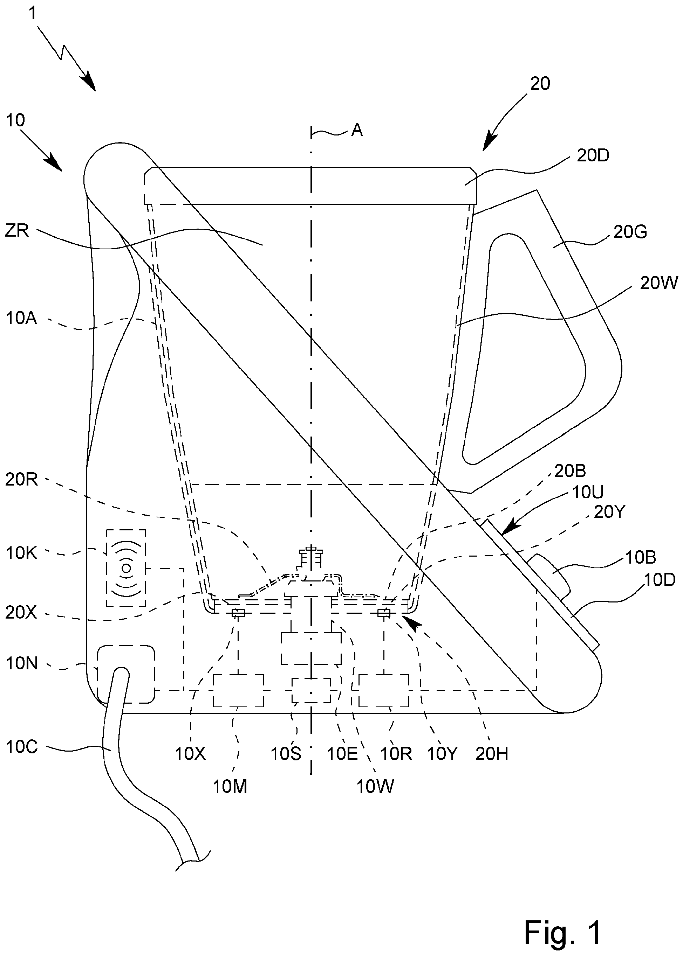

Fig. 1 zeigt schematisch eine vorschlagsgemäße Küchenmaschine 1 zur Zubereitung bzw. Bearbeitung von Lebensmitteln, insbesondere zur Zubereitung von Speisen/Gerichten und/oder Bestandteilen davon. Bei der Küchenmaschine 1 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 1 weist vorzugsweise eine Basisstation 10 und/oder ein Gefäß 20 zur Aufnahme von (nicht dargestellten) Lebensmitteln auf.

Die Basisstation 10 und das Gefäß 20 sind vorzugsweise elektrisch und/oder mechanisch miteinander verbunden oder verbindbar, insbesondere um ein Erhitzen und/oder Mischen/Umrühren des Lebensmittels in dem Gefäß 20 zu ermöglichen. Es sind darüber hinaus auch Lösungen möglich, bei denen die Basisstation 10 und das Gefäß 20 zusätzlich fluidisch miteinander verbunden oder verbindbar sind, beispielsweise um in der Basisstation 10 erzeugten Wasserdampf in das Gefäß 20 zu leiten.

Fig. 1 zeigt die Küchenmaschine 1 im üblichen Gebrauchszustand bzw. in der Anschlussposition, in der das Gefäß 20 elektrisch und/oder mechanisch an die Basisstation 10 angeschlossen ist.

Die Basisstation 10 weist vorzugsweise eine Aufnahme 10A auf, um das Gefäß 20 zumindest teilweise und/oder bodenseitig aufzunehmen. Besonders bevorzugt ist das Gefäß 20 zumindest teilweise in die Basisstation 10 einsetzbar oder einhängbar, um das Gefäß 20 mechanisch und/oder elektrisch mit der Basisstation 10 zu verbinden.

Das Gefäß 20 weist eine Wandung 20W, einen Boden 20B und einen Zubereitungsraum ZR auf, wobei die Wandung 20W den Zubereitungsraum ZR radial bzw. seitlich und der Boden 20B den Zubereitungsraum ZR axial bzw. von unten begrenzt.

Das Gefäß 20 weist vorzugsweise einen Deckel 20D auf, um den Zubereitungsraum ZR axial bzw. von oben zu begrenzen und/oder insbesondere drucksicher zu verschließen.

Optional ist das Gefäß 20 mit einem Griff 20G ausgestattet, um die Handhabung des Gefäßes 20 zu erleichtern.

Bei der dargestellten Ausführungsform ist das Gefäß 20 zumindest im Wesentlichen rund bzw. zylinderförmig ausgebildet. Es sind jedoch grundsätzlich auch Ausführungsformen möglich, bei denen das Gefäß 20 eckig, insbesondere rechteckig, ausgebildet ist.

Das Gefäß 20 weist eine Mittelachse A auf, wobei die Mittelachse A mittig durch das Gefäß 20 bzw. den Zubereitungsraum ZR verläuft, wie in Fig. 1 angedeutet.

Vorzugsweise ist die Mittelachse A eine Längs- oder Symmetrieachse des vorzugsweise länglichen, zylindrischen und/oder zumindest im Wesentlichen rotationssymmetrischen Gefäßes 20.

Optional ist das Gefäß 20 mit einem Rührer 20R ausgestattet, insbesondere um Lebensmittel im Zubereitungsraum ZR zu zerkleinern und/oder zu (durch-)mischen. Der Rührer 20R ist vorzugsweise am Boden 20B des Gefäßes 20 angeordnet bzw. drehbar gelagert. Der Rührer 20R weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Vorzugsweise entspricht die Mittelachse A des Gefäßes 20 der Drehachse des Rührers 20R.

Vorzugsweise ist das Gefäß 20 mechanisch mit der Basisstation 10 verbunden oder verbindbar, um den Rührer 20R mittels der Basisstation 10 anzutreiben.

Zum Antrieb des Rührers 20R weist die Küchenmaschine 1, insbesondere die Basisstation 10, einen Elektromotor 10E auf, der über eine Welle 10W mit dem Rührer 20R verbunden oder verbindbar ist und/oder - in der Anschlussposition des Gefäßes 20 - von unten formschlüssig in den Boden 20B eingreift.

Wie eingangs bereits erläutert, ist die Küchenmaschine 1 dazu ausgebildet, Lebensmittel bzw. ein Medium im Gefäß 20 bzw. im Zubereitungsraum ZR zu erhitzen.

Zu diesem Zweck ist das Gefäß 20 bzw. der Zubereitungsraum ZR elektrisch beheizbar bzw. weist die Küchenmaschine 1 ein elektrisches Heizsystem 20H auf. Das Heizsystem 20H ist zum (unmittelbaren) Erhitzen des Gefäßes 20, insbesondere des Bodens 20B und/oder des Zubereitungsraums ZR, ausgebildet. Besonders bevorzugt ist das Heizsystem 20H als Dickschichtheizung ausgebildet.

Bei der dargestellten Ausführungsform ist das Heizsystem 20H in das Gefäß 20, insbesondere den Boden 20B, integriert bzw. bildet das Heizsystem 20H oder ein Teil des Heizsystems 20H den Boden 20B des Gefäßes 20 oder einen Teil davon. Es sind jedoch auch konstruktive Lösungen möglich, bei denen die Basisstation 10 das Heizsystem 20H aufweist oder bildet.

Um eine Stromversorgung der Basisstation 10 und/oder des Gefäßes 20, insbesondere des Heizsystems 20H und/oder des Elektromotors 10E, zu ermöglichen, ist die Küchenmaschine 1, insbesondere die Basisstation 10, mit einem Netzteil 10N - vorzugsweise mit einer entsprechenden Ladeelektronik - und/oder einem Netzkabel 10C zum Anschluss an ein Stromnetz ausgestattet.

Vorzugsweise weist die Basisstation 10 einen oder mehrere elektrische Anschlüsse 10X bzw. 10Y für das Gefäß 20 auf, um das Gefäß 20 - in der Anschlussposition - elektrisch mit der Basisstation 10 bzw. dem Netzteil 10N zu verbinden bzw. mit elektrischer Energie zu versorgen.

Die elektrischen Anschlüsse 10X bzw. 10Y ist bzw. sind vorzugsweise in die Aufnahme 10A der Basisstation 10 integriert, insbesondere derart, dass durch Einsetzen des Gefäßes 20 in die Basisstation 10 automatisch eine elektrische Verbindung zwischen dem Gefäß 20 und der Basisstation 10 hergestellt wird.

Das Gefäß 20 weist vorzugsweise einen oder mehrere zu dem elektrischen Anschluss 10X bzw. 10Y korrespondierende elektrische Anschlüsse 20X bzw. 20Y auf, vorzugsweise wobei der elektrische Anschluss 20X bzw. 20Y auf einer Unterseite des Gefäßes 20 bzw. des Boden 20B angeordnet ist, wie in Fig. 1 angedeutet.

Die elektrischen Anschlüsse 10X bzw. 10Y und 20X bzw. 20Y sind vorzugsweise durch einen oder mehrere elektrische Kontakte oder - insbesondere für eine drahtlose Energieübertragung - durch eine oder mehrere Spulen gebildet.

Die Küchenmaschine 1, insbesondere die Basisstation 10, weist vorzugsweise eine Benutzerschnittstelle 10U, eine Datenverarbeitungseinrichtung 10R, eine Steuereinrichtung 10S, eine Kommunikationseinrichtung 10K und/oder eine Messeinrichtung 10M auf, vorzugsweise wobei die Benutzerschnittstelle 10U, die Datenverarbeitungseinrichtung 10R, die Steuereinrichtung 10S, die Kommunikationseinrichtung 10K, die Messeinrichtung 10M, das Netzteil 10N, das Heizsystem 20H, der Elektromotor 10E und/oder die Anschlüsse 10X, 10Y elektrisch miteinander verbunden sind, wie in Fig. 1 durch Strichlinien angedeutet.

Die Benutzerschnittstelle 10U ist durch mindestens eine Anzeigeeinrichtung 10D, wie einen Bildschirm, und/oder mindestens eine Eingabeeinrichtung 10B, insbesondere ein Bedienelement, wie ein Drehknopf, gebildet. Über die Benutzerschnittstelle 10U kann ein Nutzer der Küchenmaschine 1 mit der Küchenmaschine 1 interagieren bzw. ein bzw. eine oder mehrere Informationen/Parameter, beispielsweise betreffend den Betrieb der Küchenmaschine 1, das zuzubereitende Lebensmittel und/oder das zu verwendende Rezept, der Küchenmaschine 1 entnehmen und/oder hinzufügen.

Die Datenverarbeitungseinrichtung 10R ist vorzugsweise eine Einrichtung zur Auswertung, Speicherung und/oder Verarbeitung ein oder mehrerer Signale, Daten, Messwerte, Referenzwerte, Informationen, Parameter o.dgl. Insbesondere weist die Datenverarbeitungseinrichtung 10R eine Recheneinheit, wie einen Prozessor, und/oder einen (Daten-)Speicher, beispielsweise in Form einer SSD, auf.

Die Steuereinrichtung 10S ist vorzugsweise dazu ausgebildet, den Elektromotor 10E bzw. den Rührer 20R und/oder das Heizsystem 20H insbesondere entsprechend den Vorgaben eines Rezepts zu steuern, insbesondere zu aktivieren bzw. zu deaktivieren und/oder die Leistung des Elektromotors 10E und/oder des Heizsystems 20H anzupassen, vorzugsweise zumindest teilweise automatisch.

Durch die Kommunikationseinrichtung 10K kann die Küchenmaschine 1 mit einem oder mehreren (externen) Geräten, insbesondere einem Mobilgerät 5, wie einem Mobiltelefon, und/oder Einrichtungen, insbesondere einer Zentraleinrichtung, wie einem Server, (datentechnisch) gekoppelt werden.

Insbesondere ermöglicht die Kommunikationseinrichtung 10K eine drahtgebundene oder drahtlose Datenverbindung zwischen der Küchenmaschine 1 und einem oder mehreren (externen) Geräten bzw. einer oder mehreren Einrichtungen, um ein Signal und/oder eine Information, insbesondere betreffend den Betrieb der Küchenmaschine 1, die zuzubereitenden Lebensmittel und/oder das zu verwendende Rezept, zu ermitteln bzw. zwischen der Küchenmaschine 1 und dem bzw. den Geräten und/oder der bzw. den Einrichtung(en) auszutauschen, wobei der Datenaustausch bzw. die Signalübertragung dabei direkt oder indirekt erfolgen kann.

Ein Signal im Sinne der vorliegenden Erfindung ist vorzugsweise ein Mittel zur Informationsübertragung, eine (modulierte) Welle, eine Bitsequenz, ein Paket im informationstechnischen Sinne oder dergleichen. Insbesondere sind einem Signal eine oder mehrere Informationen zugeordnet und/oder in dem Signal enthalten, die mittels des Signals übermittelbar ist bzw. sind.

Die Kommunikationseinrichtung 10K weist vorzugsweise einen Receiver zum Empfangen eines Signals, einen Transmitter zum Senden eines Signals und/oder eine Schnittstelle, insbesondere eine Funkschnittstelle, eine WPAN-Schnittstelle, eine Nahfeldkommunikationsschnittstelle, eine NFC-Schnittstelle, eine WLAN-Schnittstelle oder eine sonstige, besonders bevorzugte drahtlose, Schnittstelle auf.

Mittels der Messeinrichtung 10M können eine oder mehrere Messgrößen, wie eine Temperatur, ein Gewicht, eine elektrische Spannung, eine elektrische Stromstärke, ein elektrischer Widerstand, eine Drehzahl, ein Druck, eine Luftfeuchtigkeit und/oder eine Neigung der Küchenmaschine 1, insbesondere der Basisstation 10 und/oder des Gefäßes 20, besonders bevorzugt des Elektromotors 10E und/oder des Heizsystems 20H, (direkt oder indirekt) bestimmt bzw. gemessen werden. Zu diesem Zweck weist die Messeinrichtung 10M einen oder mehrere Sensoren bzw. Messgeräte auf, wie einen Temperatursensor, eine Waage, ein Spannungsmessgerät, ein Strommessgerät, ein Drehzahlmessgerät, einen Drucksensor, einen Feuchtigkeitssensor und/oder einen Neigungssensor.

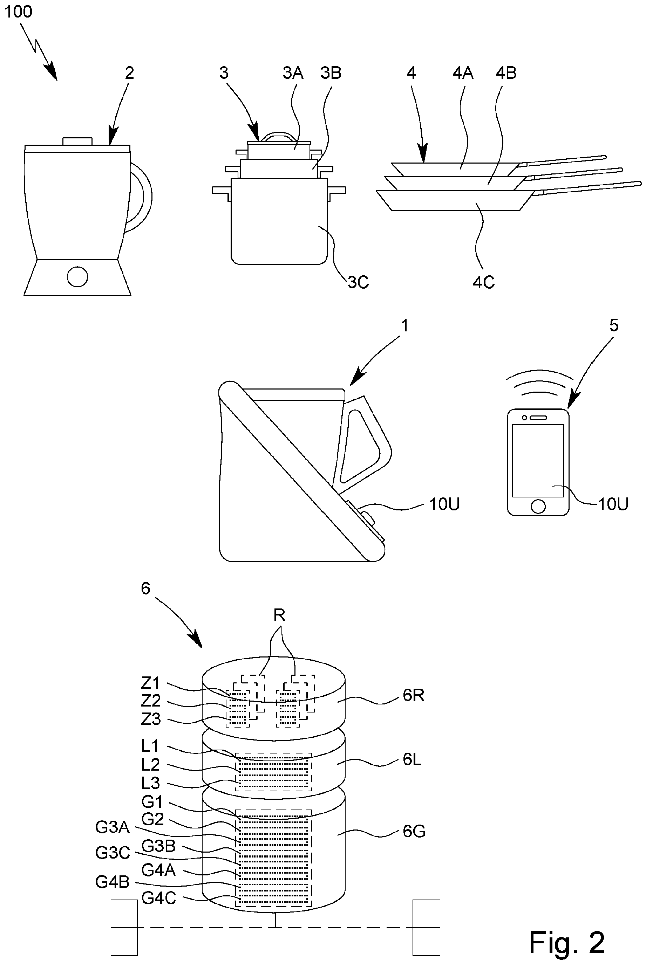

Fig. 2 zeigt schematisch ein vorschlagsgemäßes Küchensystem 100 zur zumindest teilweise automatischen Zubereitung bzw. Verarbeitung eines Lebensmittels, insbesondere zur Zubereitung von Speisen/Gerichten und/oder Bestandteilen davon.

Das Küchensystem 100 ist vorzugsweise mehrteilig bzw. durch mehrere (einzelne) Komponenten gebildet.

Das Küchensystem 100 umfasst mindestens ein Küchengerät, insbesondere die Küchenmaschine 1. Es ist jedoch bevorzugt, dass das Küchensystem 100 mehrere Küchengeräte umfasst, insbesondere um mittels einer Auswahl von Küchengeräten ein Lebensmittel zuzubereiten.

Bei der in Fig. 2 dargestellten Ausführungsform umfasst das Küchensystem 100 zusätzlich zur Küchenmaschine 1 einen Mixer 2, mehrere Töpfe 3A bis 3C und mehrere Pfannen 4A bis 4C.

Vorzugsweise sind die Küchengeräte des Küchensystems 100 unterschiedlich ausgebildet und/oder unterscheiden sich einige oder alle Küchengeräte des Küchensystems 100 im Hinblick auf ihre funktionalen, technischen und/oder lebensmittelspezifischen Fähigkeiten, Funktionen und/oder Eigenschaften, insbesondere im Hinblick auf eine Leistung, eine Temperatur bzw. einen Temperaturbereich, ein (lebensmittelspezifisches) Fassungsvermögen und/oder eine (lebensmittelspezifische) Höchstmenge.

Bei der dargestellten Ausführungsform sind die Küchengeräte, insbesondere die Töpfe 3A bis 3C und die Pfannen 4A bis 4C, unterschiedlich dimensioniert bzw. weisen die Küchengeräte, insbesondere die Töpfe 3A bis 3C und die Pfannen 4A bis 4C, ein unterschiedliches Fassungsvermögen auf.

Wie eingangs bereits erläutert, weist das vorschlagsgemäße Küchensystem 100 vorzugsweise eine Benutzerschnittstelle, eine Datenverarbeitungseinrichtung und/oder eine Steuereinrichtung auf.

Es ist bevorzugt, dass die Benutzerschnittstelle 10U, die Datenverarbeitungseinrichtung 10R und/oder die Steuereinrichtung 10S der Küchenmaschine 1 als Benutzerschnittstelle, Datenverarbeitungseinrichtung und/oder Steuereinrichtung des Küchensystems 100 verwendet wird/werden. Es sind jedoch auch Lösungen möglich, bei denen ein anderes Küchengerät die Benutzerschnittstelle, die Datenverarbeitungseinrichtung und/oder die Steuereinrichtung des Küchensystems 100 aufweist oder bildet.

Beispielsweise kann das Küchensystem 100 ein Mobilgerät 5, wie ein Mobiltelefon, aufweisen oder damit (datentechnisch) gekoppelt werden, vorzugsweise wobei das Mobilgerät 5 die oder eine zusätzliche Benutzerschnittstelle, die oder eine zusätzliche Datenverarbeitungseinrichtung und/oder die oder eine zusätzliche Steuereinrichtung des Küchensystems 100 aufweist oder bildet.

Das Küchensystem 100, insbesondere die Datenverarbeitungseinrichtung 10R, ist vorzugsweise mit einem Datenbanksystem 6 (datentechnisch) verbunden oder verbindbar. Zusätzlich oder alternativ kann das Küchensystem 100, vorzugsweise die Küchenmaschine 1 und/oder das Mobilgerät 5, das oder ein zusätzliches Datenbanksystem 6 aufweisen.

Das Datenbanksystem 6 weist vorzugsweise eine (digitale) Rezeptdatenbank 6R, eine (digitale) Lebensmitteldatenbank 6L und/oder eine (digitale) Gerätedatenbank 6G auf. Das Datenbanksystem 6 kann auch noch weitere Datenbanken umfassen, wie eine (digitale) Maßeinheitendatenbank mit mehreren Maßeinheiten(-arten) und dazugehörigen Umrechnungsfaktoren.

Wie eingangs bereits erläutert, sind/ist die Rezeptdatenbank 6R, die Lebensmitteldatenbank 6L und/oder die Gerätedatenbank 6G vorzugsweise (jeweils) als relationale und/oder tabellenbasierte Datenbank ausgebildet und/oder in dem (gemeinsamen) Datenbanksystem 6 integriert.

Das Datenbanksystem 6, insbesondere die Rezeptdatenbank 6R, weist vorzugsweise ein oder mehrere (digitale) Rezepte bzw. Rezeptprogramme R auf, insbesondere wobei die Rezepte R eine programmatische Anweisung zur Zubereitung bzw. Verarbeitung eines Lebensmittels mittels des Küchensystems 100 bzw. der Küchenmaschine 1 beinhalten.

Die Rezepte R weisen vorzugsweise jeweils mindestens einen oder mehrere Zubereitungsschritte Z auf, wobei die Zubereitungsschritte Z nacheinander bzw. gemäß einer voreingestellten Reihenfolge durchzuführen sind und/oder jeweils einen Datensatz der Rezepte R bilden.

Vorzugsweise weist das Datenbanksystem 6, insbesondere die Rezeptdatenbank 6R, besonders bevorzugt jedes Rezept R der Rezeptdatenbank 6R, für jeden Zubereitungsschritt Z (genau) einen Datensatz auf.

Vorzugsweise umfasst jedes Rezept R bzw. jeder Zubereitungsschritt Z eines Rezepts R ein bzw. eine oder mehrere Angaben, Informationen, Werte, Kenngrößen und/oder Parameter betreffend ein zu verwendendes bzw. rezeptgemäßes Lebensmittel und/oder ein bzw. eine oder mehrere Angaben, Informationen, Werte, Kenngrößen und/oder Parameter betreffend ein zu verwendendes bzw. rezeptgemäßes Küchengerät und/oder eine durchzuführende Handlung bzw. Handlungsanweisung.

Die Angaben, Informationen, Werte, Kenngrößen und/oder Parameter betreffend das rezeptgemäße Küchengerät und/oder eine durchzuführende Handlung bzw. Handlungsanweisung werden im Folgenden Zubereitungsparameter genannt.

Ein Zubereitungsparameter eines Rezepts R bzw. eines Zubereitungsschritts Z kann beispielsweise eine (Zubereitungs-)Zeit t, eine (Zubereitungs-)Temperatur T, ein (Zubereitungs-)Druck, eine (Zubereitungs-)Drehzahl und/oder eine (Zubereitungs-)Leistung P sein.

Beispielsweise kann in einem ersten Zubereitungsschritt Z1 eines Rezepts R eine angegebene bzw. rezeptgemäße Menge M1 eines Lebensmittels für eine vorbestimmte Heizzeit ta als (erster) Zubereitungsparameter einer vorbestimmten Temperatur T oder (Heiz-)Leistung P als (zweiter) Zubereitungsparameter in einem rezeptgemäßen Küchengerät ausgesetzt werden.

Die Lebensmitteldatenbank 6L umfasst vorzugsweise ein bzw. eine oder mehrere Angaben, Informationen, Werte, Kenngrößen und/oder Parameter für ein oder mehrere Lebensmittel, im Folgenden Lebensmittelparameter genannt. Insbesondere sind in der Lebensmitteldatenbank 6L ein oder mehrere Lebensmittelparameter einem oder mehreren Lebensmitteln bzw. einem Lebensmittelidentifikator L - vorzugsweise tabellarisch - zugeordnet.

Ein Lebensmittelidentifikator L ist ein einem Lebensmittel zugeordneter Identifikator und dient der eindeutigen Identifizierung des Lebensmittels. In Fig. 2 sind drei Lebensmittelidentifikatoren L1 bis L3 dargestellt, wobei der erste Lebensmittelidentifikator L1 einem ersten Lebensmittel, der zweite Lebensmittelidentifikator L2 einem zweiten Lebensmittel und der dritte Lebensmittelidentifikator L3 einem dritten Lebensmittel zugeordnet ist. Vorzugsweise weist das Datenbanksystem 6, insbesondere die Lebensmitteldatenbank 6L, für ein oder mehrere Lebensmittel (genau) einen Datensatz mit mindestens einem Lebensmittelparameter auf.

Ein Lebensmittelparameter kann beispielsweise eine Dichte, eine spezifische Wärmekapazität c, eine spezifische Verdampfungsenthalpie h, ein Zerkleinerungsfaktor fz, ein Mixfaktor fm, eine Härte, eine Elastizität, eine Schmelztemperatur, eine Siedetemperatur, ein Nährwert, eine Wärmeleitfähigkeit, eine Löslichkeit und/oder eine Teilbarkeit eines Lebensmittels sein.

Das Datenbanksystem 6, insbesondere die Gerätedatenbank 6G, umfasst vorzugsweise ein bzw. eine oder mehrere Angaben, Informationen, Werte, Kenngrößen und/oder Parameter für das bzw. die Küchengeräte des Küchensystems 100, im Folgenden Geräteparameter genannt.

Insbesondere sind in dem Datenbanksystem 6 bzw. der Gerätedatenbank 6G ein oder mehrere Geräteparameter einem oder mehreren Küchengeräten bzw. einem oder mehreren Geräteidentifikatoren G - vorzugsweise tabellarisch - zugeordnet.

Ein Geräteidentifikator G ist ein einem Küchengerät zugeordneter Identifikator und dient der eindeutigen Identifizierung des Küchengeräts. Besonders bevorzugt sind jedem Küchengerät des Küchensystems 100 jeweils genau ein Geräteidentifikator G zugeordnet.

In Fig. 2 sind acht Geräteidentifikatoren G1 bis G4C dargestellt, wobei der erste Geräteidentifikator G1 der Küchenmaschine 1, der zweite Geräteidentifikator G2 dem Mixer 2, die dritten bis fünften Geräteidentifikatoren G3A bis G3C den Töpfen 3A bis 3C und die sechsten bis achten Geräteidentifikatoren G4A bis G4C den Pfannen 4A bis 4C zugeordnet sind.

Vorzugsweise weist das Datenbanksystem 6, insbesondere die Gerätedatenbank 6G, für jedes Küchengerät des Küchensystems 100 (genau) einen Datensatz mit mindestens einem Geräteparameter auf.

Ein Geräteparameter kann beispielsweise eine technische und/oder lebensmittelspezifische Funktion, wie eine Heizfunktion, eine Kühlfunktion, eine Zerkleinerungsfunktion und/oder eine Rühr- bzw. Mischfunktion, und/oder eine technische und/oder lebensmittelspezifische Eigenschaft, wie eine Leistung P, ein (lebensmittelspezifisches) Fassungsvermögen V, eine (lebensmittelspezifische) Temperatur, ein Temperaturbereich, eine (lebensmittelspezifische) Maximaltemperatur, eine (lebensmittelspezifische) Drehzahl, ein Drehzahlbereich, eine (lebensmittelspezifische) Maximaldrehzahl, ein Drehmoment, eine (lebensmittelspezifische) Höchstmenge, eine Siebgröße o. dgl., sein.

Wie bereits erläutert, ist bzw. sind das Küchensystem 100, insbesondere die Küchenmaschine 1 und/oder das Mobilgerät 5, besonders bevorzugt die Datenverarbeitungseinrichtung 10R, mit dem Datenbanksystem 6, insbesondere der Rezeptdatenbank 6R, der Lebensmitteldatenbank 6L und/oder der Gerätedatenbank 6G, (datentechnisch) gekoppelt oder koppelbar, vorzugsweise mittels der Kommunikationseinrichtung 10K und/oder derart, dass die Daten bzw. Datensätze, insbesondere die Zubereitungsparameter, die Lebensmittelparameter und/oder die Geräteparameter, abgerufen, verarbeitet, gespeichert und/oder verändert werden können, besonders bevorzugt mittels der Datenverarbeitungseinrichtung 10R.

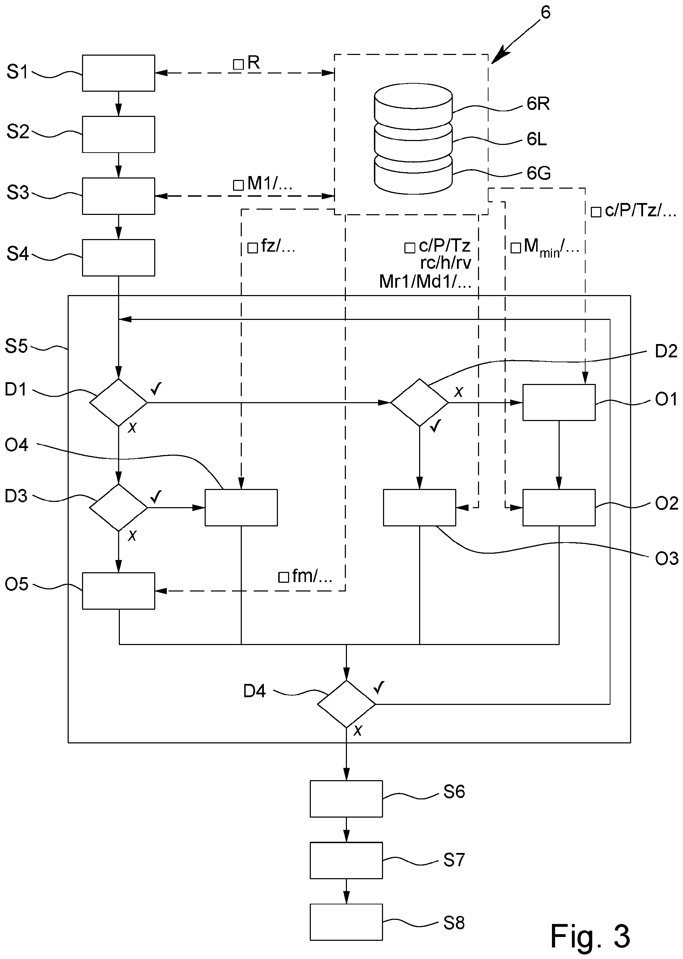

Im Folgenden wird anhand der Figuren 3 bis 6 das vorschlagsgemäße Verfahren zum Betreiben des Küchensystems 100 bzw. der Küchenmaschine 1 näher beschrieben.

Das Verfahren ist vorzugsweise mehrstufig bzw. mehrschrittig ausgebildet. Insbesondere weist das Verfahren mehrere Verfahrensschritte auf.

Fig. 3 zeigt ein schematisches Ablaufdiagramm des vorschlagsgemäßen Verfahrens mit mehreren, hier acht, Verfahrensschritten S1 bis S8, wobei die einzelnen Verfahrensschritte S1 bis S8 grundsätzlich unabhängig voneinander realisiert werden können.

Das vorschlagsgemäße Verfahren wird vorzugsweise durch das bzw. in dem Küchensystem 100, insbesondere mittels der Küchenmaschine 1, der Steuereinrichtung 10S, der Datenverarbeitungseinrichtung 10R, der Benutzerschnittstelle 10U, der Kommunikationseinrichtung 10K und/oder dem Datenbanksystem 6, durchgeführt.

Wie eingangs bereits erläutert, sollen mit dem vorschlagsgemäßen Verfahren auch im Vergleich zu den rezeptgemäßen Mengen M1 veränderte bzw. skalierte Mengen M2 eines Lebensmittels mittels des Küchensystems 100 zumindest teilweise automatisch zubereitet werden, insbesondere durch (automatisches) Festlegen bzw. Anpassen eines oder mehrerer Zubereitungsparameter und/oder des bzw. der zu verwendenden Küchengeräte, besonders bevorzugt vollautomatisch und/oder (ausschließlich) mittels der Datenverarbeitungseinrichtung 10R und/oder ohne dass ein Benutzer den bzw. die Zubereitungsparameter manuell festlegen bzw. anpassen und/oder das bzw. die Küchengeräte manuell auswählen muss.

Das Verfahren wird vorzugsweise durch eine Eingabe eines Benutzers über die Benutzerschnittstelle 10U, insbesondere die Eingabeeinrichtung 10B, initiiert.

Vorzugsweise wird in einem ersten Verfahrensschritt S1 ein Rezept R aus dem Datenbanksystem 6 bzw. der Rezeptdatenbank 6R ausgewählt, insbesondere über die Benutzerschnittstelle 10U bzw. die Eingabeeinrichtung 10B und/oder unter Zugriff auf die Rezeptdatenbank 6R.

Ein Benutzer kann folglich in einem ersten Verfahrensschritt S1 über die Benutzerschnittstelle 10U, insbesondere die Eingabeeinrichtung 10B und/oder Anzeigeeinrichtung 10D, auf das Datenbanksystem 6, insbesondere die Rezeptdatenbank 6R, zugreifen, um ein präferiertes Rezept R auszuwählen, wie in Fig. 3 durch eine Strichlinie verdeutlicht.

In einem weiteren bzw. zweiten Verfahrensschritt S2 wird ein Skalierungsfaktor fs bestimmt und/oder das ausgewählte Rezept R mengenmäßig skaliert, insbesondere mittels der oder einer weiteren Benutzereingabe. Es ist jedoch auch möglich, dass hier keine Benutzereingabe notwendig ist. Beispielsweise kann der Skalierungsfaktor fs oder eine Portions- bzw. Personenanzahl in der Datenverarbeitungseinrichtung 10R gespeichert bzw. voreingestellt sein.

Der Skalierungsfaktor fs ist vorzugsweise ein Faktor, mit dem die in dem Rezept R angegebene bzw. rezeptgemäße Menge M1 eines Lebensmittels multipliziert wird, um eine Skalierung des Rezepts R bzw. der rezeptgemäßen Menge M1 zu ermöglichen bzw. das Rezept R mengenmäßig anzupassen und/oder um eine skalierte Menge M2 zu bestimmen, besonders bevorzugt gemäß der folgenden Gleichung:

$$M2 = fs\ M1.$$

Vorzugsweise kann ein Benutzer über die Benutzerschnittstelle 10U, insbesondere die Eingabeeinrichtung 10B, die Anzahl der gewünschten Portionen, die Menge eines vorhandenen Lebensmittels und/oder ein körperliches Befinden eingeben, um den Skalierungsfaktor fs zu bestimmen.

Beispielsweise beträgt der Skalierungsfaktor fs 0,5, wenn ein Benutzer lediglich zwei statt der in dem Rezept R angegebenen bzw. voreingestellten vier Portionen wünscht, lediglich die Hälfte eines für das ausgewählte Rezept R benötigten Lebensmittels zur Verfügung steht oder der Benutzer unterdurchschnittlich hungrig ist.

In einem weiteren bzw. dritten Verfahrensschritt S3 wird das Rezept R bzw. der Rezeptablauf des Rezepts R in Hinblick auf die benötigten Lebensmittel analysiert. Insbesondere werden die in den Zubereitungsschritten Z des Rezepts R angegebenen bzw. rezeptgemäßen Mengen M1 der Lebensmittel aus dem Datenbanksystem 6, insbesondere der Rezeptdatenbank 6R, abgerufen, wie in Fig. 3 durch eine Strichlinie verdeutlicht, und optional in der Datenverarbeitungseinrichtung 10R gespeichert.

In einem weiteren bzw. vierten Verfahrensschritt S4 werden die rezeptgemäßen Mengen M1 skaliert bzw. mit dem Skalierungsfaktor fs - insbesondere in bzw. mittels der Datenverarbeitungseinrichtung 10R - multipliziert, um die skalierten Mengen M2 zu ermitteln/berechnen.

Vorzugsweise werden alle im Rezept R bzw. in den Zubereitungsschritten Z angegebenen bzw. rezeptgemäßen Mengen M1 skaliert. Es ist jedoch möglich, dass eine oder mehrere rezeptgemäße Mengen M1 von einer Skalierung ausgenommen bzw. nicht alle rezeptgemäßen Mengen M1 eines Lebensmittels skaliert werden und/oder die Skalierung für eine oder mehrere rezeptgemäße Mengen M1 in einem späteren Verfahrensschritt zurückgenommen wird, wie im Folgenden noch näher erläutert wird.

In einem weiteren bzw. fünften Verfahrensschritt S5 wird die Zubereitung an die Skalierung bzw. an die skalierten Mengen M2 (automatisch) optimiert bzw. angepasst. Vorzugsweise werden bzw. wird ein oder mehrere Zubereitungsparameter in Abhängigkeit von der skalierten Menge M2 insbesondere unter Verwendung der Lebensmitteldatenbank 6L bzw. eines oder mehrerer Lebensmittelparameter (automatisch) festgelegt bzw. angepasst, insbesondere (ausschließlich) mittels der Datenverarbeitungseinrichtung 10R.

Durch die Festlegung bzw. Anpassung der Zubereitungsparameter wird ermöglicht, dass die Qualität des zubereiteten Lebensmittels, der zubereiteten Speise und/oder des zubereiteten Gerichts trotz veränderter bzw. skalierter Mengen M2 gleichbleibt.

Es hat sich herausgestellt, dass - vorzugsweise ausschließlich - die (Zubereitungs-)Zeit t, insbesondere die Heizzeit ta, die Zerkleinerungszeit tz und/oder die Mixzeit tm, eines oder mehrerer Lebensmittel an die Skalierung des Rezepts R bzw. an die skalierten Mengen M2 angepasst werden müssen, insbesondere um ein gleichbleibendes Ergebnis zu erzielen.

Die Leistung P, insbesondere die Rühr-, Zerkleinerungs- und/oder Heizstufe, und/oder die (Ziel-)Temperatur des Küchensystems 100 bzw. der Küchenmaschine 1 sind hingegen nicht anzupassen. Es sind jedoch Verfahrensvarianten möglich, bei denen zusätzlich oder alternativ zu den Zeiten t (auch) die Leistung P und/oder die Temperatur T des Küchensystems 100 bzw. der Küchenmaschine 1 an die Skalierung des Rezepts R bzw. an die skalierten Mengen M2 angepasst werden.

Zur Festlegung bzw. Anpassung der Zubereitungsparameter werden die Zubereitungsschritte Z nacheinander durchlaufen, vorzugsweise wobei zuerst der bzw. die Zubereitungsparameter des ersten Zubereitungsschritts Z und zuletzt der bzw. die Zubereitungsparameter des letzten Zubereitungsschritts Z festgelegt/angepasst wird bzw. werden.

Vorzugsweise werden/sind die Zubereitungsschritte Z in die Gruppen "Erhitzen", "Kochen", "Dünsten", "Zerkleinern" und/oder "Mixen und Rühren" eingeteilt.

Beim Erhitzen wird ein Lebensmittel mittels des Küchensystems 100, insbesondere der Küchenmaschine 1, besonders bevorzugt mittels des Heizsystems 20H, vorzugsweise auf eine (Ziel- bzw. Zubereitungs-)Temperatur Tz erhitzt, vorzugsweise für eine Heizzeit ta, und/oder bei einer (Ziel- bzw. Zubereitungs-)Temperatur Tz gegart, vorzugsweise gekocht und/oder gedünstet.

Insbesondere kann ein Erhitzen ein Kochen und/oder Dünsten des Lebensmittels sein.

Beim Kochen wird ein Lebensmittel in einer Flüssigkeit, insbesondere Wasser, gekocht, vorzugsweise bei der Temperatur Tz bzw. der Siedetemperatur der Flüssigkeit und/oder bei zumindest im Wesentlichen 100 °C.

Beim Dünsten wird ein Lebensmittel ohne oder mittels einer Flüssigkeit, insbesondere Wasser, gegart. Vorzugsweise kann ein Dünsten ein Garen eines Lebensmittels in Dampf eines Mediums und/oder ohne Kontakt zu einem dampferzeugenden Medium, beispielsweise Wasser, umfassen (Dämpfen bzw. Dampfgaren).

Beim Zerkleinern wird ein Lebensmittel mittels des Küchensystems 100, insbesondere der Küchenmaschine 1, besonders bevorzugt des Rührers 20R, zerkleinert bzw. püriert, vorzugsweise für eine Zerkleinerungszeit tz.

Beim Mixen und Rühren, beides im Folgenden Mixen genannt, wird ein Lebensmittel mittels des Küchensystems 100, insbesondere der Küchenmaschine 1, besonders bevorzugt des Rührers 20R, gerührt und/oder gemischt bzw. gemixt, vorzugsweise für eine Mixzeit tm.

Im Fall des Erhitzens, insbesondere des Kochens und/oder Dünstens, ist der festzulegende bzw. anzupassende Zubereitungsparameter die Heizzeit ta bzw. wird die Heizzeit ta an die Skalierung des Rezepts R bzw. an die skalierte Mengen M2 festgelegt bzw. angepasst.

Im Fall des Zerkleinerns ist der festzulegende bzw. anzupassende Zubereitungsparameter die Zerkleinerungszeit tz bzw. wird die Zerkleinerungszeit tz an die Skalierung des Rezepts R bzw. an die skalierte Mengen M2 festgelegt bzw. angepasst.

Im Fall des Mixens ist der festzulegende bzw. anzupassende Zubereitungsparameter eine Mixzeit tm bzw. wird die Mixzeit tm an die Skalierung des Rezepts R bzw. an die skalierte Mengen M2 festgelegt bzw. angepasst.

Zur Festlegung bzw. Anpassung des Zubereitungsparameters, insbesondere der Heizzeit ta, der Zerkleinerungszeit tz und/oder der Mixzeit tm, wird bzw. werden die benötigten Angaben, Informationen, Werte, Kenngrößen und/oder Parameter aus dem Datenbanksystem 6, insbesondere der Rezeptdatenbank 6R, der Lebensmitteldatenbank 6L und/oder der Gerätedatenbank 6G, abgerufen und/oder in der Datenverarbeitungseinrichtung 10R - zumindest temporär - gespeichert und/oder verarbeitet.

Vorzugsweise wird - zunächst bzw. anhand einer ersten Verzweigung D1 - überprüft, ob in dem Zubereitungsschritt Z ein Erhitzen stattfindet, insbesondere indem die (Ziel- bzw. Zubereitungs-)Temperatur Tz des Zubereitungsschritts Z mit einer vordefinierten Grenztemperatur verglichen wird. Beispielsweise handelt es sich dann um ein Erhitzen, wenn die (Ziel- bzw. Zubereitungs-)Temperatur Tz des Zubereitungsschritts Z größer als oder gleich 50 °C ist.

Wenn ein Erhitzen vorliegt bzw. die (Ziel- bzw. Zubereitungs-)Temperatur Tz des Zubereitungsschritts Z größer als die Grenztemperatur ist, wird vorzugsweise anschließend bzw. anhand einer zweiten Verzweigung D2 überprüft, ob ein Dünsten oder ein Kochen stattfindet, beispielsweise anhand der Menge des erhitzen Wassers und/oder indem überprüft wird, ob rezeptgemäß ein Dünst-Utensil verwendet werden soll.

Im Fall des Kochens wird vorzugsweise in einer (Rechen-)Operation O1 und/oder im Fall des Dünstens in einer (Rechen-)Operation O3 die Heizzeit ta festgelegt bzw. angepasst.

Die Heizzeit ta ist vorzugsweise die Zeit, für die ein Lebensmittel in dem Zubereitungsschritt Z des Rezepts R erhitzt wird. Insbesondere ist die Heizzeit ta die Zeit, die benötigt wird, bis die Zieltemperatur Tz des Lebensmittels erreicht wird, und/oder die Zeit, die das Lebensmittel die Zieltemperatur Tz aufweist bzw. der Zieltemperatur Tz ausgesetzt ist.

Die Zieltemperatur Tz ist vorzugsweise die Temperatur, ab der Garprozesse des erhitzten Lebensmittels einsetzen. Insbesondere ist die Zieltemperatur Tz lebensmittelspezifisch.

Vorzugsweise erhöht sich die Heizzeit ta bei einer Erhöhung der rezeptgemäßen Menge M1 bzw. bei einem Skalierungsfaktor fs größer 1 und verringert sich die Heizzeit ta bei einer Verringerung der rezeptgemäßen Menge M1 bzw. bei einem Skalierungsfaktor fs kleiner 1.

Die (skalierte) Heizzeit ta2 einer vergrößerten Menge M2 ist folglich größer und die (skalierte) Heizzeit ta2 einer verkleinerten Menge M2 kleiner als die (rezeptgemäße) Heizzeit ta1 der rezeptgemäßen Menge M1.

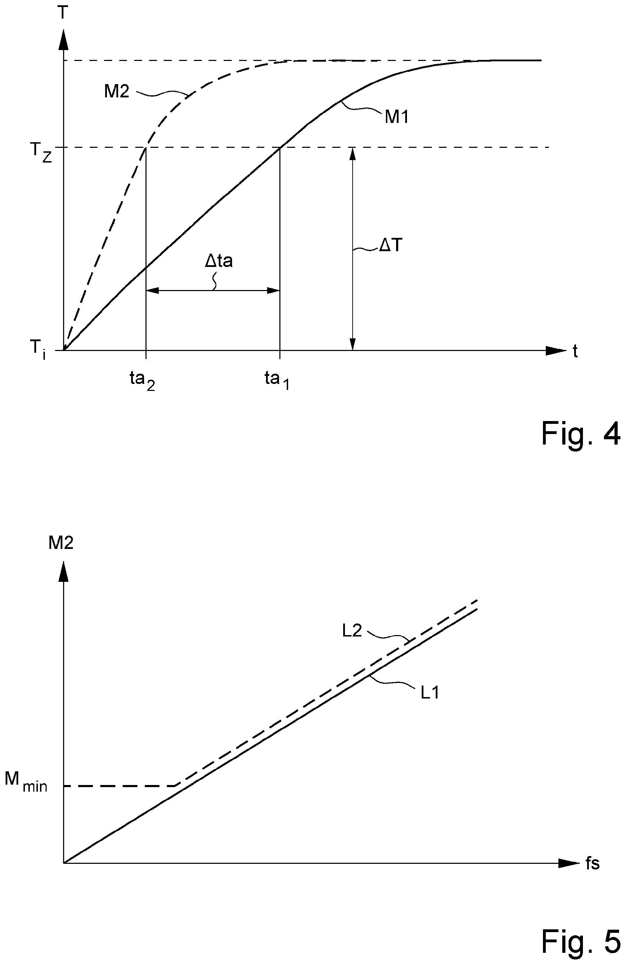

Fig. 4 zeigt ein schematisches Diagramm mit einem exemplarischen Verlauf der Temperatur T eines Lebensmittels in Abhängigkeit von der Zeit t bei Erhitzen des Lebensmittels. Die durchgezogene Linie ist der Temperaturverlauf einer ersten bzw. rezeptgemäßen Menge M1 und die gestrichelte Linie der Temperaturverlauf einer zweiten bzw. skalierten Menge M2, wobei die skalierte Menge M2 kleiner als die rezeptgemäße Menge M1 ist. Für die rezeptgemäße Menge M1 wird eine Heizzeit ta1 benötigt, um die Temperatur Tz zu erreichen. Für die skalierte Menge M2 wird eine kürzere Heizzeit ta2 benötigt, um die Temperatur Tz zu erreichen. Die Heizzeit ta wird folglich durch die Skalierung um den Betrag bzw. die Heizzeitänderung $\Delta$ta reduziert.

Die Heizzeit ta hängt von der Heizleistung P des Küchengeräts, der Wärmekapazität C bzw. der spezifischen Wärmekapazität c des Lebensmittels, der Menge M2 des Lebensmittels, der Isttemperatur Ti des Lebensmittels und der (Zubereitungs-bzw. Ziel-)Temperatur Tz des Zubereitungsschritts Z ab, besonders bevorzugt (näherungsweise) gemäß der folgenden Gleichung:

$$ta = (C\ \Delta T)\ /\ P,$$

mit C insbesondere in [J/K] als Wärmekapazität des Lebensmittels, $\Delta T$ insbesondere in [K] als zu bewirkende Temperaturerhöhung und P insbesondere in [W] als effektive Heizleistung des Küchengeräts.

Die Wärmekapazität C ist das Produkt der spezifischen Wärmekapazität c insbesondere in [J / (kg K)] des Lebensmittels und der (skalierten) Menge M2 insbesondere in [kg] des Lebensmittels.

Bei mehreren Lebensmitteln werden die Wärmekapazitäten $C_i$ der einzelnen Lebensmittel addiert, um die Gesamtwärmekapazität C zu berechnen, besonders bevorzugt gemäß der folgenden Gleichung:

$$C = \Sigma_i\ C_i = \Sigma_i\ (M2_i\ c_i).$$

Die spezifische Wärmekapazität c des Lebensmittels kann insbesondere der Lebensmitteldatenbank 6L entnommen und/oder - insbesondere bei Lebensmitteln mit mehreren Bestandteilen - anhand von Nährwertangaben in der Lebensmitteldatenbank 6L berechnet werden, vorzugsweise gemäß der folgenden Gleichung:

$$c = \Sigma_i\ c_i\ x_i,$$

mit x als Massenanteil des Bestandteils des Lebensmittels.

Die erforderliche Temperaturerhöhung $\Delta T$ ist die Differenz zwischen der Zieltemperatur Tz und der Isttemperatur Ti des Lebensmittels.

Die Isttemperatur Ti des Lebensmittels ist die Temperatur des Lebensmittels zu Beginn des Zubereitungsschritts Z. Insbesondere hängt die Isttemperatur Ti des Lebensmittels von der Zubereitungshistorie bzw. den vorherigen Zubereitungsschritten Z ab. Vorzugsweise ist die Isttemperatur Ti größer als die umgebende Raumtemperatur.

Ein in einem vorherigen Zubereitungsschritt Z erhitztes Lebensmittel kühlt sich mit der Zeit bzw. mit jedem nachfolgenden Zubereitungsschritt Z ab, insbesondere wenn kein erneutes Erhitzen und/oder Hinzufügen (zusätzlicher) erhitzter Lebensmittel erfolgt.

Näherungsweise reduziert sich die Temperatur des Lebensmittels mit jedem Zubereitungsschritt Z bzw. mit der Zeit um eine (konstante) Abkühlrate rc, besonders bevorzugt näherungsweise gemäß der folgenden Gleichung:

$$Ti = Tm - N\ rc \quad bzw.$$

$$Ti = Tm - \Delta t_N \, rc,$$

mit Tm insbesondere in [K] als Temperatur des Lebensmittels unmittelbar nach dem letzten temperaturerhöhenden Zubereitungsschritt Z, N als Anzahl der Zubereitungsschritte Z nach dem letzten temperaturerhöhenden Zubereitungsschritt Z bzw. seit Erreichen der Temperatur Tm bis zum vorliegenden Zubereitungsschritt Z, $\Delta t_N$ insbesondere in [s] als die Zeit(-spanne) zwischen dem letzten temperaturerhöhenden Zubereitungsschritt Z bzw. seit Erreichen der Temperatur Tm bis zum aktuellen Zeitpunkt und rc insbesondere in [K] bzw. [K/s] (>0) als effektive Abkühlrate pro Zubereitungsschritt Z bzw. Zeit(-spanne) $\Delta t_N$.

Die seit dem letzten temperaturerhöhenden Zubereitungsschritt Z vergangene (durchschnittliche) Zeit(-spanne) $\Delta t_N$ kann in dem Rezept R vorgegeben sein bzw. anhand des Rezepts R bzw. der Anzahl N der Zubereitungsschritte Z (automatisch) bestimmt bzw. geschätzt werden, insbesondere wobei der Wert für die übliche/durchschnittliche Zeit(-spanne) $\Delta t_N$ empirisch ermittelt ist.

Zusätzlich oder alternativ ist es möglich, die Zeit(-spanne) $\Delta t_N$ und/oder die Isttemperatur Ti des Lebensmittels (automatisch) zu messen, vorzugsweise mittels der Küchenmaschine 1, insbesondere der Datenverarbeitungseinrichtung 10R.

Die Temperatur Tm kann die Zieltemperatur Tz des letzten temperaturerhöhenden Zubereitungsschritts Z und/oder eines vorherigen Zubereitungsschritts Z sein, bei dem ein Erhitzen des Lebensmittels erfolgte.

Die Temperatur Tm kann jedoch auch eine Mischtemperatur sein, die sich durch Mischen von mehreren Lebensmitteln ergibt, vorzugsweise (näherungsweise) gemäß der folgenden Gleichung:

$$Tm = [\Sigma_i \, (C_i \, T_i)] \, / \, [\Sigma_i \, C_i],$$

mit $C_i$ insbesondere in [J/K] als Wärmekapazitäten und $T_i$ insbesondere in [K] als Temperaturen der einzelnen, miteinander gemischten Lebensmittel.

Die zu erzielende bzw. erforderliche Temperaturerhöhung $\Delta T$ ergibt sich somit folglich (näherungsweise) gemäß der folgenden Gleichung:

$$\Delta T = Tz - Ti = Tz - [\, \Sigma_i \, (C_i \, T_i) \, / \, \Sigma_i \, C_i \,] + N \, rc$$

bzw.

$$\Delta T = Tz - Ti = Tz - [\, \Sigma_i \, (C_i \, T_i) \, / \, \Sigma_i \, C_i \,] + \Delta t_N \, rc.$$

Die zu erzielende bzw. erforderliche Temperaturerhöhung $\Delta T$ kann aber auch (näherungsweise) gemäß der folgenden Gleichung abgeschätzt werden:

$$\Delta T = Tz - Tm.$$

Anhand der erforderlichen Temperaturerhöhung $\Delta T$, der spezifischen Wärmekapazität c, der skalierten Menge M2 und der Leistung P des Küchengeräts kann anschließend die Heizzeit ta festgelegt bzw. angepasst werden.

Vorzugsweise wird für die (Rechen-)Operation O1 bzw. zur Festlegung/Anpassung der Heizzeit ta die spezifische Wärmekapazität c und/oder der Massenanteil x der Lebensmittelbestandteile aus der Lebensmitteldatenbank 6L, die Heizleistung P aus der Gerätedatenbank 6G und/oder die Isttemperatur Ti, die Zieltemperatur Tz, die Zeitspanne $\Delta t_N$, die Abkühlrate rc und/oder die Anzahl der Zubereitungsschritte N aus der Rezeptdatenbank 6R (automatisch) abgerufen, wie in Fig. 3 durch Strichlinien angedeutet.

Vorzugsweise wird die Festlegung bzw. Anpassung der Heizzeit ta und/oder die Skalierung für alle zu erhitzenden Lebensmittel und/oder Zubereitungsschritte Z des Rezepts R durchgeführt. Es ist jedoch möglich, dass bestimmte Lebensmittel und/oder Zubereitungsschritte Z von einer Anpassung ta und/oder Skalierung ausgenommen werden und/oder die vorgenommene Skalierung - insbesondere in einer anschließenden (Rechen-)Operation O2 - zurückgenommen wird.

Insbesondere kann für ein oder mehrere Lebensmittel und/oder einen oder mehrere Zubereitungsschritte Z eine Mindestmenge $M_{min}$ vorgesehen sein, die auch nicht durch die bzw. nach der Skalierung unterschritten werden darf.

Beispielsweise kann beim Anbraten eine Mindestmenge $M_{min}$ Fett von 20 g vorgegeben sein, um ein Anbrennen des Lebensmittels zu verhindern.

Fig. 5 zeigt ein schematisches Diagramm mit einem exemplarischen Verlauf der skalierten Menge M2 eines Lebensmittels in Abhängigkeit vom Skalierungsfaktor fs. Die durchgezogene Linie zeigt den exemplarischen Verlauf der skalierten Menge M2 eines ersten Lebensmittels (Lebensmittelidentifikator L1) und die gestrichelte Linie den exemplarischen Verlauf der skalierten Menge M2 eines zweiten Lebensmittels (Lebensmittelidentifikator L2). Die Menge M2 des ersten Lebensmittels ist uneingeschränkt skalierbar. Die Menge M2 des zweiten Lebensmittels ist jedoch nur bis zu einem unteren Grenzwert bzw. einer definierten Mindestmenge $M_{min}$ skalierbar, die unabhängig vom Skalierungsfaktor fs nicht unterschritten werden darf.

Im Fall eines Unterschreitens der Mindestmenge $M_{min}$ durch die Skalierung wird vorzugsweise zur Festlegung bzw. Anpassung der Heizzeit ta die Mindestmenge $M_{min}$ verwendet. Es ist jedoch grundsätzlich auch möglich, trotz eines Unterschreitens der Mindestmenge $M_{min}$ durch die Skalierung mit der skalierten Menge M2 die Heizzeit ta festzulegen bzw. anzupassen, insbesondere wenn die Auswirkungen auf die Festlegung bzw. Anpassung der Heizzeit ta vernachlässigbar gering sind.

Im Fall des Dünstens erfolgt vorzugsweise eine Festlegung bzw. Anpassung der Heizzeit ta wie im Fall des Kochens, vorzugsweise in der (Rechen-)Operation O3.

Es ist jedoch möglich, dass insbesondere wegen der gleichmäßigen Verteilung des Wasserdampfs im Garraum und des insgesamt im Vergleich zum Kochen schlechteren Wärmeübergangs beim Dünsten die Heizzeit ta nicht oder nur dann verändert werden muss, wenn der Skalierungsfaktor fs einen Grenzwert überschreitet und/oder unterschreitet, beispielsweise wenn der Skalierungsfaktor fs mehr als 1,5 und/oder weniger als 0,5 beträgt.

Wenn keine Anpassung der Heizzeit ta beim Dünsten erfolgt, wird vorzugsweise die rezeptgemäße Menge M1 des dampferzeugenden Lebensmittels, üblicherweise Wasser, nicht skaliert bzw. die vorgenommene Skalierung wieder auf den ursprünglichen Wert M1 bzw. auf die rezeptgemäße Menge zurückgesetzt.

Sofern beim Dünsten auch die rezeptgemäße Menge M1 des dampferzeugenden Lebensmittels verringert wird und/oder der Skalierungsfaktor fs den Grenzwert unterschreitet, ist vorzugsweise ebenfalls eine Mindestmenge $M_{min}$ für das dampferzeugende Lebensmittel einzuhalten, die auch nicht durch die bzw. nach der Skalierung unterschritten werden darf, insbesondere um ein vollständiges Verdampfen des dampferzeugenden Lebensmittels zu vermeiden.

Zusätzlich oder alternativ kann bei der Skalierung der rezeptgemäßen Menge M1 des dampferzeugenden Lebensmittels die Verdampfungsrate, die spezifische Verdampfungsenthalpie h des dampferzeugenden Lebensmittels und/oder die Leistung P des Küchengeräts berücksichtigt werden, insbesondere um ein vollständiges Verdampfen des dampferzeugenden Lebensmittels zu verhindern.

Die skalierte Menge M2 des dampferzeugenden Lebensmittels kann näherungsweise gemäß der folgenden Gleichung ermittelt werden:

$$M2 \geq rv \, ta2 \approx ( P / h ) \, ta2,$$

mit M2 insbesondere in [kg] als skalierte Menge des dampferzeugenden Lebensmittels, ta2 insbesondere in [s] als Heizzeit, rv insbesondere in [kg/s] (>0) als Verdampfungsrate, h insbesondere in [kJ/kg] als spezifische Verdampfungsenthalpie des dampferzeugenden Lebensmittels und P insbesondere in [W] als (effektive) Heizleistung.

Für den Fall, dass das dampferzeugende Lebensmittel als Teil der zubereiteten Speise bzw. des zubereiteten Gerichts verwendet wird, beispielsweise als Soße, ist die rezeptgemäße Menge M1 des dampferzeugenden Lebensmittels vorzugsweise ebenfalls zu skalieren, wenn die rezeptgemäße Menge M1 des zu dünstenden Lebensmittels skaliert wird.

Vorzugsweise ist bei der Skalierung der rezeptgemäßen Menge M1 des dampferzeugenden Lebensmittels das Verhältnis der nach dem Dünsten verbleibenden Menge des dampferzeugenden Lebensmittels, im folgenden Restmenge genannt, zu der Menge M1 des zu dünstenden Lebensmittels gleichzuhalten, vorzugsweise gemäß der folgenden Gleichung:

$$Mr2 / Md2 = Mr1 / Md1 \quad bzw.$$

$$Mr2 = ( Md2 / Md1 ) \, Mr1,$$

mit Mr2 insbesondere in [kg] oder [l] als skalierte Restmenge des dampferzeugenden Lebensmittels, Md2 insbesondere in [kg] oder [l] als skalierte Menge des zu dünstenden Lebensmittels, Mr1 insbesondere in [kg] oder [l] als rezeptgemäße Restmenge des dampferzeugenden Lebensmittels und Md1 insbesondere in [kg] oder [l] als rezeptgemäße Menge des zu dünstenden Lebensmittels.

Insbesondere um ein vollständiges Verdampfen zu verhindern, ist in diesem Fall vorzugsweise die Verdampfungsrate rv, die spezifische Verdampfungsenthalpie h und/oder die (effektive) Heizleistung P zu berücksichtigen, besonders bevorzugt gemäß der folgenden Gleichung:

$$M2 = Mr2 + rv\ ta2 \approx Mr2 + (\ P\ /\ h\ )\ ta2,$$

mit M2 insbesondere in [kg] oder [l] als skalierte Menge des dampferzeugenden Lebensmittels, Mr2 insbesondere in [kg] oder [l] als skalierte Restmenge des dampferzeugenden Lebensmittels, rv insbesondere in [kg/s] oder [l/s] (>0) als Verdampfungsrate, ta2 insbesondere in [s] als angepasste/skalierte Heizzeit, h insbesondere in [kJ/kg] als spezifische Verdampfungsenthalpie des dampferzeugenden Lebensmittels und P insbesondere in [W] als (effektive) Heizleistung.

Vorzugsweise wird für die (Rechen-)Operation O3 bzw. zur Skalierung der Menge M1 des dampferzeugenden Lebensmittels bzw. zur Berechnung der skalierten Menge M2 des dampferzeugenden Lebensmittels die Verdampfungsrate rv und/oder die spezifische Verdampfungsenthalpie h aus der Lebensmitteldatenbank 6L, die Heizleistung P aus der Gerätedatenbank 6G und/oder die rezeptgemäße Restmenge Mr1 des dampferzeugenden Lebensmittels und/oder die rezeptgemäße Menge Md1 des zu dünstenden Lebensmittels aus der Rezeptdatenbank 6R (automatisch) abgerufen, wie in Fig. 3 durch Strichlinien angedeutet.

Wenn kein Erhitzen vorliegt bzw. die (Ziel- bzw. Zubereitungs-)Temperatur Tz des Zubereitungsschritts Z kleiner als die Grenztemperatur ist, wird vorzugsweise anschließend bzw. anhand einer dritten Verzweigung D3 überprüft, ob ein Zerkleinern oder ein Mixen stattfindet, beispielsweise anhand der rezeptgemäßen Drehstufe und/oder Drehzahl des Elektromotors 10E und/oder indem die rezeptgemäße Drehstufe und/oder Drehzahl mit einer Grenzstufe bzw. Grenzdrehzahl verglichen wird.

Beispielsweise handelt es sich dann um ein Zerkleinern, wenn die rezeptgemäße Drehstufe größer als oder gleich 900, 1000 oder 1100 Umdrehungen pro Minute ist, und dann um ein Mixen, wenn die rezeptgemäße Drehstufe kleiner als 900, 1100 oder 1200 Umdrehungen pro Minute ist.

Im Fall des Zerkleinerns wird vorzugsweise in einer (Rechen-)Operation O4 die Zerkleinerungszeit tz an die Skalierung des Rezepts R bzw. an die skalierte Menge M2 festgelegt bzw. angepasst.

Die Zerkleinerungszeit tz ist die Zeit, für die ein Lebensmittel in einem Zubereitungsschritt Z des Rezepts R mittels des Küchensystems 100, insbesondere der

Küchenmaschine 1, besonders bevorzugt des Rührers 20R, zerkleinert bzw. püriert wird, insbesondere um ein vordefiniertes Zerkleinerungsergebnis bzw. eine vordefinierte Stückgrößenverteilung zu erreichen.

Vorzugsweise erhöht sich die Zerkleinerungszeit tz bei einer Erhöhung der rezeptgemäßen Menge M1 bzw. bei einem Skalierungsfaktor fs größer 1 und/oder verringert sich die Zerkleinerungszeit tz bei einer Verringerung der rezeptgemäßen Menge M1 bzw. bei einem Skalierungsfaktor fs kleiner 1.

Die Zerkleinerungszeit tz2 einer vergrößerten Menge M2 ist folglich größer und die Zerkleinerungszeit tz2 einer verkleinerten Menge M2 kleiner als die Zerkleinerungszeit tz1 der rezeptgemäßen Menge M1.

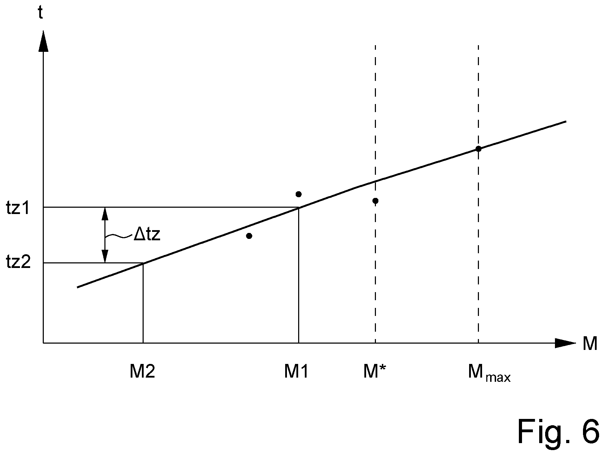

Fig. 6 zeigt einen schematischen Verlauf der Zerkleinerungszeit tz in Abhängigkeit der Menge M des zu zerkleinernden Lebensmittels.

Für die rezeptgemäße Menge M1 wird eine Zerkleinerungszeit tz1 benötigt, um eine gewünschte Stückgrößenverteilung zu erreichen.

Für die skalierte bzw. kleinere Menge M2 wird eine kürzere Zerkleinerungszeit tz2 benötigt, um eine gleiche Stückgrößenverteilung zu erreichen.

Die rezeptgemäße Zerkleinerungszeit tz1 wird folglich durch die Skalierung um den Betrag $\Delta$tz reduziert, insbesondere ohne dass das Zubereitungs- bzw. Zerkleinerungsergebnis verändert wird.

Der Zusammenhang zwischen der Zerkleinerungszeit tz und der Menge M ist vorzugsweise experimentell bzw. empirisch für ein oder mehrere Lebensmittel und/oder Leistungen der Küchenmaschine 1 ermittelt.

Die Zerkleinerungszeit tz hängt insbesondere von der Leistung und/oder Drehzahl bzw. Drehstufe der Küchenmaschine 1 bzw. des Elektromotors 10E, der Menge M1 bzw. M2 des Lebensmittels und/oder der Art des Lebensmittels, insbesondere der physikalischen Struktur des Lebensmittels, ab.

Für eine vorgegebene Leistung der Küchenmaschine 1 bzw. des Elektromotors 10E kann die Zerkleinerungszeit tz für ein Lebensmittel (näherungsweise) gemäß der folgenden Gleichung bestimmt werden:

$$tz = M\ fz,$$

mit M insbesondere in [kg] als Menge des Lebensmittels und fz insbesondere in [s/kg] als Zerkleinerungsfaktor.

Der Zusammenhang zwischen der Zerkleinerungszeit tz und der Menge M, insbesondere der Zerkleinerungsfaktor fz, ist vorzugsweise experimentell bzw. empirisch ermittelt, wie in Fig. 6 durch die vier Messpunkte angedeutet.

Vorzugsweise ist der Zusammenhang bzw. der Zerkleinerungsfaktor fz für ein oder mehrere Lebensmittel, Leistungen und/oder Drehstufen bzw. Drehzahlen des Elektromotors 10E in dem Datenbanksystem 6, insbesondere der Lebensmitteldatenbank 6L, gespeichert. Es ist jedoch auch möglich, dass der Zusammenhang bzw. der Zerkleinerungsfaktor fz für ein oder mehrere Lebensmittel, Leistungen und/oder Drehstufen bzw. Drehzahlen des Elektromotors 10E in einer separaten Zerkleinerungsdatenbank gespeichert ist.

Es hat sich herausgestellt, dass derselbe Zusammenhang bzw. Zerkleinerungsfaktor fz für mehrere Lebensmittel verwendet werden kann bzw. einer Lebensmittelgruppe mit mehreren Lebensmitteln ein einheitlicher Zerkleinerungsfaktor fz zugeordnet werden kann. Auf diese Weise wird der Aufwand zur Bestimmung des Zusammenhangs bzw. des Zerkleinerungsfaktors fz reduziert.

Zur Festlegung bzw. Anpassung der Zerkleinerungszeit tz bzw. in der (Rechen-)Operation O4 wird die skalierte Menge M2 des Lebensmittels mit dem dem Lebensmittel zugeordneten Zerkleinerungsfaktor fz multipliziert, vorzugsweise wobei der Zerkleinerungsfaktor fz aus dem Datenbanksystem 6, insbesondere der Lebensmitteldatenbank 6L, (automatisch) abgerufen wird, wie in Fig. 3 durch Strichlinien angedeutet.

Im Fall des Mixens wird vorzugsweise ebenfalls die Mixzeit tm in einer (Rechen-)Operation O5 an die skalierte Menge M des Lebensmittels angepasst. Vorzugsweise wird dazu ein empirisch bzw. experimentell ermittelter Zusammenhang zwischen der Mixzeit tm und der Menge M des Lebensmittels, insbesondere ein Mixfaktor fm, aus dem Datenbanksystem 6, insbesondere der Lebensmitteldatenbank 6L, (automatisch) abgerufen bzw. verwendet.

Es hat sich herausgestellt, dass ein Mixen im Vergleich zu den anderen Gruppen der Zubereitung vergleichsweise unempfindlich gegenüber Mengenvariationen ist. Bei einer Verkleinerung der rezeptgemäßen Menge M1 bzw. bei einem Skalierungsfaktor fs kleiner 1 kann von einer Anpassung der Mixzeit tm abgesehen werden.

Bei einer Vergrößerung der rezeptgemäßen Menge M1 bzw. bei einem Skalierungsfaktor fs größer 1 sollte die Mixzeit tm1 vergrößert werden, vorzugsweise mittels eines Mixfaktors fm, insbesondere um eine gleichbleibende Durchmischung zu gewährleisten.

Besonders bevorzugt wird bei einer Erhöhung der rezeptgemäßen Menge M1 des Lebensmittels um 50 % die Mixzeit tm um 10 % erhöht, vorzugsweise gemäß der folgenden Gleichung:

$$tm2 = ( M2 / M1 ) \; tm1 \; ( 1{,}1 / 1{,}5 ),$$

mit tm2 insbesondere in [s] als angepasste Mixzeit, tm1 insbesondere in [s] als rezeptgemäße Mixzeit, M1 insbesondere in [kg] als rezeptgemäße Menge und M2 insbesondere in [kg] als skalierte Menge.

Die (mathematischen) Zusammenhänge, Gleichungen, Tabellen und/oder Diagramme zur Festlegung bzw. Anpassung der Zubereitungsparameter, insbesondere der Heizzeit ta, der Zerkleinerngszeit tz und/oder der Mixzeit tm, sind vorzugsweise elektronisch - beispielsweise als Funktionsgleichungen oder Tabellen - in der Datenverarbeitungseinrichtung 10R, besonders bevorzugt einem Speicher der Datenverarbeitungseinrichtung 10R, hinterlegt bzw. gespeichert.

Sofern bestimmte Angaben, Informationen, Werte, Kenngrößen und/oder Parameter insbesondere betreffend ein zu verwendendes Lebensmittel nicht vorhanden, nicht abrufbar und/oder fehlerhaft sind, werden vorzugsweise voreingestellte (Standard-)Werte, Kenngrößen und/oder Parameter verwendet. Beispielsweise kann bei einer fehlenden Angabe zu der spezifischen Wärmekapazität eines Lebensmittels die spezifische Wärmekapazität von Wasser, also ungefähr 4 kJ / (kg K), verwendet werden. Auf diese Weise wird die Fehleranfälligkeit des vorschlagsgemäßen Verfahrens reduziert.

Wie bereits erläutert, werden alle Zubereitungsschritte Z des Rezepts R im Hinblick auf eine mögliche Festlegung bzw. Anpassung der Zubereitungsparameter geprüft.

Insbesondere wird nach der Festlegung bzw. Anpassung eines Zubereitungsparameters - anhand einer weiteren bzw. vierten bzw. letzten Verzweigung D4 - überprüft, ob ein weiterer Zubereitungsschritt Z vorliegt.

Sind alle Zubereitungsschritte Z überprüft und gegebenenfalls angepasst, ist der fünfte Verfahrensschritt S5 bzw. die Festlegung bzw. Anpassung der Zubereitungsparameter abgeschlossen.

In einem weiteren bzw. sechsten Verfahrensschritt S6 wird eine Plausibilitätsprüfung vorgenommen und/oder automatisch überprüft, ob das Rezept R mit den festgelegten bzw. angepassten Zubereitungsparametern durchgeführt werden kann. Insbesondere wird automatisch überprüft, ob der bzw. die Zubereitungsschritte Z mit der skalierten Menge M2 durchführbar sind.

Vorzugsweise wird automatisch überprüft, ob die skalierte Menge M2 von unteilbaren Lebensmitteln, wie Eiern, nur in ganzzahligen Vielfachen vorhanden sind.

Vorzugsweise wird automatisch überprüft, ob die mittels der Benutzerschnittstelle 10U angezeigten Mengen gerundet und/oder mit der vordefinierten Maßeinheit dargestellt werden. Die Maßeinheiten, Maßeinheitenarten und/oder Umrechnungsfaktoren für die Maßeinheiten können in dem Datenbanksystem 6, insbesondere in einer Maßeinheitendatenbank, gespeichert sein.

Vorzugsweise wird automatisch überprüft, ob das verwendete Küchengerät, insbesondere das Gefäß 20 der Küchenmaschine 1, die skalierte Menge M2 aufnehmen kann und/oder über- oder unterfüllt ist, vorzugsweise durch einen Vergleich des Fassungsvermögens V des Küchengeräts mit der skalierten Menge M2 des Lebensmittels, wobei die Dichte des Lebensmittels berücksichtigt werden kann. Vorzugsweise können für ein oder mehrere Küchengeräte und/oder ein oder mehrere Zubereitungsschritte Z (lebensmittelspezifische) Höchstmengen $M_{max}$ vorgegeben sein, insbesondere wobei die skalierte Menge M2 mit einer Höchstmenge $M_{max}$ des zu verwendenden Küchengeräts und/oder einer Höchstmenge $M_{max}$ für die Zubereitungsschritte Z verglichen wird, um zu überprüfen, ob die Zubereitungsschritte Z durchführbar sind.

Beispielsweise kann für das Zerkleinern und/oder Mixen eine (erste) Höchstmenge $M_{max}$ vorgegeben sein, wobei lediglich bis zu der Höchstmenge $M_{max}$ der Zerkleinerungsschritt Z durchführbar ist bzw. bei Überschreiten der Höchstmenge $M_{max}$ das vorgesehene Zubereitungsergebnis nicht mehr zu erreichen ist.

Zusätzlich können Werte oder Bereiche vorgegeben sein, bei denen eine Durchführung des Zubereitungsschritts Z nur unter bestimmten Bedingungen und/oder mit zusätzlichen Maßnahmen durchgeführt werden können.

Beispielsweise kann eine skalierte Menge M2 eines Lebensmittels, die einen vordefinierten Wert bzw. eine vordefinierte Grenzmenge M* überschreitet, jedoch kleiner als die Höchstmenge $M_{max}$ ist, dann noch zerkleinert werden, wenn ein Spatel zur Hilfe genommen wird. In dem Diagramm gemäß Fig. 6 sind derartige Grenzwerte dargestellt.

Vorzugsweise wird die Plausibilitätsprüfung nach Abschluss der Festlegung bzw. Anpassung der Zubereitungsparameter für alle Zubereitungsschritte Z durchgeführt. Es ist jedoch auch möglich, dass die Plausibilitätsprüfung zusätzlich oder alternativ nach jedem Zubereitungsschritt Z und/oder jeder Festlegung bzw. Anpassung der Zubereitungsparameter durchgeführt wird.

Wenn die Plausibilitätsprüfung negativ ist und/oder der bzw. die Zubereitungsschritte Z mit der skalierten Menge M2 nicht durchführbar sind, wird einem Benutzer vorzugsweise über die Benutzerschnittstelle 10U des Küchensystems 10, besonders bevorzugt die Anzeigeeinrichtung 10D, beispielsweise eine Fehlermeldung ausgegeben und/oder eine alternative, insbesondere eine höchstmögliche, skalierte Menge M2 berechnet und angegeben.

In einem optionalen siebten Verfahrensschritt S7 erfolgt eine (automatische) Sprachkorrektur, insbesondere um mittels der Benutzerschnittstelle 10U die Informationen sprachlich korrekt darzustellen.

In einem weiteren bzw. achten bzw. letzten Verfahrensschritt S8 wird vorzugsweise das skalierte/angepasste Rezept R einem Benutzer insbesondere über die Benutzerschnittstelle 10U des Küchensystems 10, besonders bevorzugt die Anzeigeeinrichtung 10D, ausgegeben bzw. angezeigt.

Im Folgenden wird eine besonders bevorzugte Verfahrensvariante beschrieben, bei der - insbesondere zusätzlich zur Festlegung bzw. Anpassung des bzw. der Zubereitungsparameter - ein oder mehrere für die Zubereitung zu verwendende Küchengerät automatisch festgelegt bzw. ausgewählt wird bzw. werden, insbesondere (ausschließlich) mittels der Datenverarbeitungseinrichtung 10R.

Wie eingangs bereits erläutert, wird bzw. werden vorzugsweise in Abhängigkeit von der skalierten Menge M2 und unter Verwendung des bzw. der Geräteparameter bzw. der Gerätedatenbank 6G ein oder mehrere für die Zubereitung zu verwendende Küchengeräte automatisch festgelegt bzw. ausgewählt, insbesondere indem das Fassungsvermögen V bzw. die Höchstmenge $M_{max}$ der Küchengeräte (systematisch) mit der skalierten Menge M2 des Lebensmittels verglichen wird.

Mit dem vorschlagsgemäßen Verfahren wird vorzugsweise die Anzahl und/oder der Einsatz der verwendeten Küchengeräte an eine Mengenveränderung bzw. an die skalierte Menge M2 angepasst bzw. optimiert, insbesondere um die (Gesamt-) Zubereitungszeit und/oder den Ressourcenaufwand bzw. den Energieverbrauch zu reduzieren oder zu minimieren.

Wie bereits erläutert, umfasst die Gerätedatenbank 6G ein oder mehrere Geräteparameter für die (unterschiedlichen) Küchengeräte des Küchensystems 100.

Vorzugsweise sind die Geräteparameter für die Küchengeräte des Küchensystems 100 bereits werksseitig in der Gerätedatenbank 6G hinterlegt.

Zusätzlich oder alternativ kann ein Benutzer insbesondere über die Benutzerschnittstelle 10U die Gerätedatenbank 6G um ein oder mehrere Küchengeräte bzw. Datensätze und/oder Geräteparameter ergänzen.

Darüber hinaus ist es möglich, dass einzelne oder alle Küchengeräte des Küchensystems 100 (datentechnisch) miteinander gekoppelt oder koppelbar sind und/oder dass sich neue Küchengeräte automatisch bzw. selbsttätig mit dem Datenbanksystem 6 bzw. der Gerätedatenbank 6G (datentechnisch) verbinden, insbesondere derart, dass das Datenbanksystem 6 bzw. die Gerätedatenbank 6G um die Geräteparameter des (neuen) Küchengeräts ergänzt wird.

Wie bereits erläutert, kann ein Geräteparameter eine technische und/oder lebensmittelspezifische Funktion und/oder Eigenschaft sein. Beispielsweise kann ein Geräteparameter ein Fassungsvermögen V und/oder eine Höchstmenge $M_{max}$ für ein bestimmtes Lebensmittel bzw. eine bestimmte Lebensmittelgruppe und/oder für eine technische bzw. gerätespezifische Funktion, wie eine Heizfunktion, eine Zerkleinerungsfunktion und/oder eine Mixfunktion, sein.

Die (lebensmittelspezifische) Höchstmenge $M_{max}$ der Küchengeräte kann jedoch auch unter Verwendung der Lebensmitteldatenbank 6L bzw. mittels eines Lebensmittelparameters, insbesondere der (Schüttgut-)Dichte, dem Zucker- und/oder Stärkegehalt und/oder dem Quellungsgrad, und/oder dem Fassungsvermögen V der Küchengeräte für die Festlegung bzw. Auswahl des zu verwendenden Küchengeräts bestimmt werden.

Vor diesem Hintergrund wird optional bei der Festlegung bzw. Auswahl des zu verwendenden Küchengeräts - zusätzlich zur Gerätedatenbank 6G bzw. zum Geräteparameter - die Lebensmitteldatenbank 6L bzw. ein Lebensmittelparameter der Lebensmitteldatenbank, insbesondere die (Schüttgut-)Dichte, der Stärke- und/oder Zuckergehalt und/oder der Quellungsgrad, verwendet, insbesondere um zusammen mit dem Fassungsvermögen V als Geräteparameter die lebensmittelspezifische Höchstmenge $M_{max}$ des Küchengeräts zu bestimmen.

Die Festlegung bzw. Auswahl des bzw. der für die Zubereitung zu verwendenden Küchengeräte erfolgt vorzugsweise unmittelbar nach der Skalierung der rezeptgemäßen Menge M1 (vierter Verfahrensschritt S4) und/oder unmittelbar vor der Festlegung bzw. Anpassung des bzw. der Zubereitungsparameter in Abhängigkeit von der skalierten Menge M2 (fünfter Verfahrensschritt S5).

Wie bereits eingangs erläutert, enthält das Rezept R eine Angabe zu dem rezeptgemäßen bzw. voreingestellten Küchengerät für ein oder mehrere Zubereitungsschritte Z.

Insbesondere für den Fall, dass keine Skalierung der rezeptgemäßen Menge M1 erfolgt, wird automatisch und/oder (ausschließlich) mittels der Datenverarbeitungseinrichtung 10R überprüft, ob ein alternatives und/oder zusätzliches Küchengerät zu dem rezeptgemäßen Küchengerät zu verwenden ist bzw. eingesetzt werden kann, vorzugsweise um den Energieverbrauch und/oder die Zubereitungszeit zu reduzieren oder zu minimieren.

Ist beispielsweise in dem Rezept R ein Zubereitungsschritt Z mehrfach vorhanden und/oder weist das Rezept R sich wiederholende bzw. identische Zubereitungsschritte Z auf, wird vorzugsweise automatisch überprüft, ob ein alternatives Küchengerät mit einem größeren Fassungsvermögen V und/oder einer größeren Höchstmenge $M_{max}$ im Vergleich zum rezeptgemäßen Küchengerät verwendet werden kann.

Für den Fall, dass ein alternatives Küchengerät mit einem größeren Fassungsvermögen V und/oder einer größeren Höchstmenge $M_{max}$ verwendet werden kann, werden die sich wiederholenden bzw. identischen Zubereitungsschritte Z vorzugsweise zusammengefasst und/oder in einem Zubereitungsschritt Z mit dem alternativen Küchengerät durchgeführt.

Beispielsweise kann in dem Rezept R ein sequentielles Zubereiten mehrerer Teilmengen eines Lebensmittels mittels eines rezeptgemäßen Küchengeräts vorgesehen sein, um in mehreren sequentiellen Zubereitungsschritten Z die Gesamtmenge des Lebensmittels zuzubereiten. In diesem Fall wird vorzugsweise - sofern vorhanden - ein alternatives Küchengerät mit einem im Vergleich zum rezeptgemäßen Küchengerät größeren Fassungsvermögen V und/oder einer größeren Höchstmenge $M_{max}$ ausgewählt, um die gesamte Menge des Lebensmittels in einem einzigen Zubereitungsschritt Z zuzubereiten.

Durch das Verfahren, insbesondere die Zusammenfassung von mehreren Zubereitungsschritten Z, können nachfolgende Zubereitungsschritte Z zeitlich vorgezogen werden. Auf diese Weise wird die Gesamtzubereitungszeit reduziert.

Zusätzlich ist es möglich, dass das durch die Verwendung des alternativen Küchengeräts frei gewordene rezeptgemäße Küchengerät nunmehr (gleichzeitig) anderweitig bzw. für einen anderen bzw. nachfolgenden Zubereitungsschritt Z verwendet wird, insbesondere derart, dass der andere bzw. nachfolgende Zubereitungsschritt Z zeitlich vorgezogen wird und/oder mehrere Zubereitungsschritte Z parallel durchgeführt werden.

Im Fall einer Mengenreduktion und/oder bei einem Skalierungsfaktor fs kleiner als 1 wird vorzugsweise automatisch überprüft, ob ein kleineres Küchengerät als das rezeptgemäße Küchengerät bzw. ein Küchengerät mit einem kleineren Fassungsvermögen V und/oder einer kleineren Höchstmenge $M_{max}$ als das Fassungsvermögen V bzw. die Höchstmenge $M_{max}$ des rezeptgemäßen Küchengeräts verwendbar bzw. zu verwenden ist, insbesondere indem das Fassungsvermögen V bzw. die Höchstmenge $M_{max}$ der Küchengeräte (systematisch) mit der skalierten Menge M2 des Lebensmittels verglichen wird.

Für den Fall, dass ein kleineres Küchengerät verwendet werden kann, wird das kleinere Küchengerät ausgewählt bzw. der Zubereitungsschritt Z mittels des kleineren Küchengeräts durchgeführt.

Besonders bevorzugt wird automatisch das kleinstmögliche Küchengerät ausgewählt bzw. das Küchengerät mit dem kleinsten Fassungsvermögen V und/oder der kleinsten Höchstmenge $M_{max}$ ausgewählt, das für die Zubereitung der skalierten Menge M2 noch ausreicht. Auf diese Weise wird der Ressourcenaufwand, insbesondere der Energieverbrauch, im Vergleich zu der Verwendung mit dem rezeptgemäßen Küchengerät reduziert.

Vorzugsweise werden im Anschluss an die Festlegung bzw. Auswahl des alternativen, insbesondere kleineren, Küchengeräts die Zubereitungsparameter in Abhängigkeit von der skalierten Menge M2 und unter Verwendung des Lebensmittelparameters automatisch festgelegt bzw. angepasst, wie bereits erläutert.

Im Fall einer Mengenerhöhung und/oder bei einem Skalierungsfaktor fs größer als 1 wird vorzugsweise automatisch überprüft, ob das rezeptgemäße Küchengerät weiterhin bzw. auch für die skalierte Menge M2 verwendbar bzw. zu verwenden ist, insbesondere indem das Fassungsvermögen V bzw. die Höchstmenge $M_{max}$ des rezeptgemäßen Küchengeräts mit der skalierten Menge M2 des Lebensmittels verglichen wird.

Für den Fall, dass die Zubereitung der skalierten Menge M2 mittels des rezeptgemäßen Küchengeräts durchgeführt werden kann, wird vorzugsweise anschließend der Zubereitungsparameter in Abhängigkeit von der skalierten Menge M2 und unter Verwendung des Lebensmittelparameters automatisch festgelegt bzw. angepasst, wie bereits erläutert.

Für den Fall, dass das rezeptgemäße Küchengerät für die skalierte Menge M2 nicht mehr verwendet werden kann, und/oder wenn das Fassungsvermögen V und/oder die Höchstmenge $M_{max}$ des rezeptgemäßen Küchengeräts zu klein für die skalierte Menge M2 ist, wird vorzugsweise automatisch überprüft, ob ein größeres Küchengerät bzw. ein Küchengerät mit einem größeren Fassungsvermögen V und/oder einer größeren Höchstmenge $M_{max}$ und/oder ein zusätzliches Küchengerät zu dem rezeptgemäßen Küchengerät verwendbar bzw. zu verwenden ist, insbesondere um die skalierte Menge M2 in einem einzigen Zubereitungsschritt Z zuzubereiten.

Vorzugsweise wird zunächst durch einen (systematischen) Vergleich des Fassungsvermögens V bzw. der Höchstmenge $M_{max}$ der Küchengeräte mit der skalierten Menge M2 automatisch überprüft, ob ein größeres Küchengerät bzw. ein Küchengerät mit einem größeren Fassungsvermögen V und/oder einer größeren Höchstmenge $M_{max}$ verwendbar bzw. zu verwenden ist.

Für den Fall, dass ein größeres Küchengerät verwendbar bzw. zu verwenden ist, wird vorzugsweise das größere Küchengerät automatisch ausgewählt bzw. der Zubereitungsschritt Z mittels des größeren Küchengeräts durchgeführt.

Besonders bevorzugt wird das nächstgrößere Küchengerät automatisch ausgewählt bzw. das Küchengerät mit dem kleinsten Fassungsvermögen V und/oder der kleinsten Höchstmenge $M_{max}$ automatisch ausgewählt, das für die Zubereitung der skalierten Menge M2 in einem einzigen Zubereitungsschritt Z noch ausreicht.

Durch das Verfahren kann folglich verhindert werden, dass das rezeptgemäße Küchengerät mehrfach verwendet werden muss und sich somit die Zubereitungszeit erhöht. Insbesondere kann die Anzahl der Zubereitungsschritte Z reduziert werden. Darüber hinaus kann das rezeptgemäße Küchengerät durch die Verwendung eines alternativen Küchengeräts für einen anderen bzw. nachfolgenden Zubereitungsschritt Z verwendet werden, insbesondere derart, dass der andere bzw. nachfolgende Zubereitungsschritt Z zeitlich vorgezogen wird und/oder mehrere Zubereitungsschritte Z parallel durchgeführt werden. Auf diese Weise wird die Zubereitungszeit reduziert.

Besonders bevorzugt wird bei oder nach der Auswahl eines alternativen Küchengeräts automatisch überprüft, ob das - durch die Verwendung eines alternativen Küchengeräts frei gewordene - rezeptgemäße Küchengerät für einen anderen bzw. nachfolgenden Zubereitungsschritt Z verwendet werden kann, insbesondere um mehrere Zubereitungsschritte Z zu parallelisieren.

Für den Fall, dass das rezeptgemäße Küchengerät für einen anderen bzw. nachfolgenden Zubereitungsschritt Z verwendbar bzw. zu verwenden ist, wird vorzugsweise der andere bzw. nachfolgende Zubereitungsschritt Z - besonders bevorzugt parallel - mittels des rezeptgemäßen Küchengeräts durchgeführt.

Zusätzlich oder alternativ wird automatisch überprüft, ob ein zusätzliches Küchengerät zu dem rezeptgemäßen Küchengerät verwendbar bzw. zu verwenden ist, insbesondere wenn kein größeres Küchengerät verwendbar ist, um die skalierte Menge M2 zeitgleich bzw. in einem einzigen Zubereitungsschritt Z zuzubereiten, und/oder um die skalierte Menge M2 mittels des rezeptgemäßen Küchengeräts und des zusätzlichen Küchengeräts zeitgleich bzw. in einem einzigen Zubereitungsschritt Z zuzubereiten.

Für den Fall, dass ein zusätzliches Küchengerät zu dem rezeptgemäßen Küchengerät verwendbar ist, wird vorzugsweise das zusätzliche Küchengerät automatisch ausgewählt und die skalierte Menge M2 mittels des rezeptgemäßen Küchengeräts und des zusätzlichen Küchengeräts insbesondere zeitgleich bzw. in einem einzigen Zubereitungsschritt Z zubereitet.

Vorzugsweise wird bzw. werden im Anschluss an die Auswahl eines alternativen und/oder zusätzlichen Küchengeräts zu dem rezeptgemäßen Küchengerät der bzw. die Zubereitungsparameter in Abhängigkeit von der skalierten Menge M2 und unter Verwendung des bzw. der Lebensmittelparameter automatisch festgelegt, wie bereits erläutert.

Das vorschlagsgemäße Verfahren ermöglicht es, eine im Vergleich zu einer rezeptgemäßen Menge M1 skalierte bzw. angepasste Menge M2 eines Lebensmittels derart zuzubereiten, dass das Zubereitungsergebnis durch automatische Anpassung des bzw. der Zubereitungsparameter eine im Vergleich zur Zubereitung der rezeptgemäßen Menge M1 gleichbleibende Qualität aufweist und darüber hinaus der Energieverbrauch und/oder die Gesamtzubereitungszeit durch den optimierten Einsatz der Küchengeräte reduziert oder minimiert wird.

Einzelne Aspekte, Merkmale und Verfahrensschritte bzw. -varianten der vorliegenden Erfindung können unabhängig, aber auch in beliebiger Kombination und/oder Reihenfolge realisiert werden.

**Bezugszeichenliste:**

| | | | |
|---|---|---|---|
| 100 | Küchensystem | h | Verdampfungsenthalpie |
| 1 | Küchenmaschine | L(1-3) | Lebensmittelidentifikator |

(fortgesetzt)

| | | | |
|---|---|---|---|
| 2 | Mixer | M | Menge |
| 3(A-C) | Topf | M1 | rezeptgemäße Menge |
| 4(A-C) | Pfanne | M2 | skalierte Menge |
| 5 | Mobilgerät | $M_{min}$ | Mindestmenge |
| 6 | Datenbanksystem | $M_{max}$ | Höchstmenge |
| | | M* | Grenzmenge |
| 6G | Gerätedatenbank | Mr1 | rezeptgemäße Restmenge |
| 6L | Lebensmitteldatenbank | Mr2 | skalierte Restmenge |
| 6R | Rezeptdatenbank | Md1 | rezeptgemäße Menge |
| 10 | Basisstation | Md2 | skalierte Menge |
| 10A | Aufnahme | N | Anzahl Zubereitungsschritte |
| 10B | Eingabeeinrichtung | O(1-5) | (Rechen-)Operation |
| 10C | Netzkabel | P | Leistung |
| 10D | Anzeigeeinrichtung | R | Rezept |
| 10E | Elektromotor | rc | Abkühlrate |
| 10K | Kommunikationseinrichtung | rv | Verdampfungrate |
| 10M | Messeinrichtung | S(1-8) | Verfahrensschritt |
| 10N | Netzteil | | |
| 10R | Datenverarbeitungseinrichtung | T | Temperatur |
| 10S | Steuereinrichtung | Ti | Isttemperatur |
| 10U | Benutzerschnittstelle | Tm | Mischtemperatur |
| 10W | Welle | Tz | Zieltemperatur |
| 10X | erster elektrischer Anschluss | $\Delta T$ | Temperaturerhöhung |
| 10Y | zweiter elektrischer Anschluss | t | Zeit |
| 20 | Gefäß | ta | Heizzeit |
| 20B | Boden | ta1 | rezeptgemäße Heizzeit |
| 20D | Deckel | ta2 | skalierte Heizzeit |
| 20G | Griff | $\Delta ta$ | Heizzeitänderung |
| 20H | Heizsystem | $\Delta t_N$ | Zeitspanne |
| 20R | Rührer | tm | Mixzeit |
| 20W | Wandung | tm1 | rezeptgemäße Mixzeit |
| 20X | erster elektrischer Anschluss | tm2 | skalierte Mixzeit |
| 20Y | zweiter elektrischer Anschluss | tz | Zerkleinerungszeit |
| A | Mittelachse | tz1 | rezeptgemäße Zerkleinerungszeit |
| C | Wärmekapazität | | |
| c | spezifische Wärmekapazität | tz2 | skalierte Zerkleinerungszeit |
| D(1-4) | Verzweigung | $\Delta tz$ | Zerkleinerungszeitänderung |
| fm | Mixfaktor | V | Fassungsvermögen |
| fs | Skalierungsfaktor | x | Massenanteil |
| fz | Zerkleinerungsfaktor | Z(1-3) | Zubereitungsschritt |
| G(1-4) | Geräteidentifikator | ZR | Zubereitungsraum |

## Patentansprüche

1. Verfahren zum Betreiben eines Küchensystems (100) zur zumindest teilweise automatischen Zubereitung eines Lebensmittels,

wobei ein Datenbanksystem (6) eingesetzt wird, das eine Rezeptdatenbank (6R) mit mehreren Rezepten (R) zur Zubereitung eines Lebensmittels umfasst,
wobei die Rezepte (R) der Rezeptdatenbank (6R) jeweils eine Angabe zu einer rezeptgemäßen Menge (M1) des Lebensmittels und einen Zubereitungsparameter für einen oder mehrere Zubereitungsschritte (Z) enthält,

wobei das Küchensystem (100) die Zubereitung des Lebensmittels anhand des Zubereitungsparameters zumindest teilweise automatisch ausführt, und

wobei anhand einer Benutzereingabe ein Rezept (R) aus der Rezeptdatenbank (6R) ausgewählt und die rezeptgemäße Menge (M1) des Lebensmittels skaliert wird,

**dadurch gekennzeichnet,**

**dass** das Datenbanksystem (6) eine Lebensmitteldatenbank (6L) mit mindestens einem Lebensmittelparameter für das Lebensmittel umfasst, wobei der Zubereitungsparameter in Abhängigkeit von der skalierten Menge (M2) und unter Verwendung des Lebensmittelparameters automatisch festgelegt wird, und/oder dass das Datenbanksystem (6) eine Gerätedatenbank (6G) mit mindestens einem Geräteparameter für mehrere Küchengeräte umfasst, wobei in Abhängigkeit von der skalierten Menge (M2) und unter Verwendung des Geräteparameters ein für die Zubereitung zu verwendendes Küchengerät automatisch festgelegt wird.

2. Verfahren nach Anspruch 1, **dadurch gekennzeichnet, dass** der Zubereitungsparameter eine Heizzeit (ta) für einen Zubereitungsschritt (Z) ist und/oder ein Zubereitungsschritt (Z) des Rezepts (R) ein Erhitzen des Lebensmittels für eine Heizzeit (ta) umfasst.

3. Verfahren nach Anspruch 2, **dadurch gekennzeichnet, dass** der Lebensmittelparameter eine spezifische Wärmekapazität (c) des Lebensmittels ist und zur Festlegung der Heizzeit (ta) verwendet wird, insbesondere wobei die spezifische Wärmekapazität (c) anhand von Nährwertangaben in der Lebensmitteldatenbank (6L) berechnet wird.

4. Verfahren nach Anspruch 2 oder 3, **dadurch gekennzeichnet, dass** zur Festlegung der Heizzeit (ta) die Isttemperatur (Ti) des Lebensmittels zu Beginn des Zubereitungsschritts (Z) ermittelt wird.

5. Verfahren nach Anspruch 4, **dadurch gekennzeichnet, dass** die Isttemperatur (Ti) anhand der Anzahl (N) der vorherigen Zubereitungsschritte (Z), einer Abkühlrate (rc) und/oder einer sich durch Mischung von mehreren Lebensmitteln einstellenden Mischungstemperatur (Tm) ermittelt wird.

6. Verfahren nach einem der voranstehenden Ansprüche, **dadurch gekennzeichnet, dass** bei der Skalierung der rezeptgemäßen Menge (M1) die Verdampfungsrate (rv) des Lebensmittels als Lebensmittelparameter, die spezifische Verdampfungsenthalpie (h) des Lebensmittels als Lebensmittelparameter und/oder die Leistung (P) des Küchengeräts als Geräteparameter verwendet wird.

7. Verfahren nach einem der voranstehenden Ansprüche, **dadurch gekennzeichnet, dass** das Rezept (R) eine Angabe zu einer Mindestmenge ($M_{min}$) des Lebensmittels für einen oder mehrere Zubereitungsschritte (Z) und/oder die Gerätedatenbank (6G) eine Angabe zu einem Fassungsvermögen (V) und/oder einer Höchstmenge ($M_{max}$) des Lebensmittels für ein oder mehrere Küchengeräte enthält, vorzugsweise wobei die skalierte Menge (M2) mindestens so groß wie die Mindestmenge ($M_{min}$) und/oder höchstens so groß wie die Höchstmenge ($M_{max}$) ist.

8. Verfahren nach einem der voranstehenden Ansprüche, **dadurch gekennzeichnet, dass** der Zubereitungsparameter eine Zerkleinerungszeit (tz) für einen Zubereitungsschritt (Z) ist und/oder ein Zubereitungsschritt (Z) des Rezepts (R) ein Zerkleinern des Lebensmittels für eine Zerkleinerungszeit (tz) umfasst.

9. Verfahren nach Anspruch 8, **dadurch gekennzeichnet, dass** zur Festlegung der Zerkleinerungszeit (tz) ein vorzugsweise empirisch ermittelter Zusammenhang zwischen der Zerkleinerungszeit (tz) und der Menge (M) des Lebensmittels, insbesondere ein Zerkleinerungsfaktor (fz), aus dem Datenbanksystem (6), insbesondere der Lebensmitteldatenbank (6L), verwendet wird.

10. Verfahren nach einem der voranstehenden Ansprüche, **dadurch gekennzeichnet, dass** der Zubereitungsparameter eine Mixzeit (tm) für einen Zubereitungsschritt (Z) ist und/oder ein Zubereitungsschritt (Z) des Rezepts (R) ein Mixen des Lebensmittels für eine Mixzeit (tm) umfasst, wobei zur Festlegung der Mixzeit (tm) ein vorzugsweise empirisch ermittelter Zusammenhang zwischen der Mixzeit (tm) und der Menge (M) des Lebensmittels, insbesondere ein Mixfaktor (fm), aus dem Datenbanksystem (6), insbesondere aus der Lebensmitteldatenbank (6L), verwendet wird.

11. Verfahren nach einem der voranstehenden Ansprüche, **dadurch gekennzeichnet, dass** den Küchengeräten in der Gerätedatenbank (6G) jeweils mindestens eine technische und/oder lebensmittelspezifische Funktion und/oder Eigenschaft, eine Leistung (P), ein Temperaturbereich, ein Fassungsvermögen (V) und/oder eine Höchstmenge ($M_{max}$) eines Lebensmittels bzw. einer Lebensmittelgruppe als Geräteparameter zugeordnet ist.

12. Verfahren nach einem der voranstehenden Ansprüche, **dadurch gekennzeichnet, dass** die Rezepte (R) der Rezeptdatenbank (6R) jeweils eine Angabe zu einem rezeptgemäßen Küchengerät enthalten, wobei in Abhängigkeit von der skalierten Menge (M2) und unter Verwendung eines Fassungsvermögens (V) und/oder einer Höchstmenge ($M_{max}$) als Geräteparameter automatisch überprüft wird, ob ein alternatives und/oder zusätzliches Küchengerät zu dem rezeptgemäßen Küchengerät zu verwenden ist.

13. Verfahren nach Anspruch 12, **dadurch gekennzeichnet, dass** im Fall einer Mengenreduktion überprüft wird, ob ein kleineres Küchengerät als das rezeptgemäße Küchengerät zu verwenden ist, und/oder dass im Fall einer Mengenerhöhung überprüft wird, ob das rezeptgemäße Küchengerät weiterhin verwendet werden kann oder ein größeres und/oder zusätzliche Küchengerät zu dem rezeptgemäßen Küchengerät zu verwenden ist.

14. Küchensystem (100) zur zumindest teilweise automatischen Zubereitung eines Lebensmittels,

    wobei das Küchensystem (100) eine Benutzerschnittstelle (10U) und eine Datenverarbeitungseinrichtung (10R) aufweist,
    wobei die Datenverarbeitungseinrichtung (10R) mit einer Rezeptdatenbank (6R) mit mehreren Rezepten (R), einer Lebensmitteldatenbank (6L) mit mindestens einem Lebensmittelparameter für das Lebensmittel und/oder einer Gerätedatenbank (6G) mit mindestens einem Geräteparameter für mehrere Küchengeräte datentechnisch verbunden oder verbindbar ist,
    wobei über die Benutzerschnittstelle (10U) ein Rezept (R) der Rezeptdatenbank (6R) auswählbar ist, und
    wobei das Küchensystem (100) eine Steuereinrichtung (10S) aufweist, um ein Rezept (R) der Rezeptdatenbank (6R) zumindest teilweise automatisch auszuführen,
    **dadurch gekennzeichnet,**
    **dass** das Küchensystem (100) zur Durchführung des Verfahrens nach einem der voranstehenden Ansprüche ausgebildet ist.

15. Computerprogrammprodukt, umfassend Befehle, die bei der Ausführung des Programms durch eine Datenverarbeitungseinrichtung (10R) diese veranlassen, das Verfahren nach einem der Ansprüche 1 bis 13 durchzuführen.

1

10

20

ZR

10A

20R

10K

20X

10N

10C

A

20D

20G

20W

20B
10U
20Y

10B
10D

10X    10S    10E    10R   10Y   20H

10M              10W

**Fig. 1**

Fig. 2

Fig. 3

Fig. 4

Fig. 5

Fig. 6

**EP 3 884 819 A1**

Europäisches
Patentamt
European
Patent Office
Office européen
des brevets

# EUROPÄISCHER RECHERCHENBERICHT

Nummer der Anmeldung

EP 20 16 5869

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 110715 A1 (VORWERK & CO INTERHOLDING GMBH) 14. Dezember 2017 (2017-12-14) * Ansprüche 1,6 * ----- | 1,2,4-8, 14,15 | INV. A47J36/32 A47J43/046 |
| X | DE 10 2014 112251 A1 (VORWERK & CO INTERHOLDING GMBH) 3. März 2016 (2016-03-03) * Absätze [0032] - [0034] * ----- | 1,2,4,5, 7,8,14, 15 | |

RECHERCHIERTE SACHGEBIETE (IPC)

A47J

Der vorliegende Recherchenbericht wurde für alle Patentansprüche erstellt

| Recherchenort | Abschlußdatum der Recherche | Prüfer |
|---|---|---|
| München | 2. September 2020 | Reichhardt, Otto |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

28

**ANHANG ZUM EUROPÄISCHEN RECHERCHENBERICHT
ÜBER DIE EUROPÄISCHE PATENTANMELDUNG NR.**

EP 20 16 5869

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-09-2020

| Im Recherchenbericht angeführtes Patentdokument | Datum der Veröffentlichung | Mitglied(er) der Patentfamilie | Datum der Veröffentlichung |
|---|---|---|---|
| DE 102016110715 A1 | 14-12-2017 | AU 2017276754 A1 | 17-01-2019 |
| | | CN 109195492 A | 11-01-2019 |
| | | DE 102016110715 A1 | 14-12-2017 |
| | | EP 3468436 A1 | 17-04-2019 |
| | | TW 201801661 A | 16-01-2018 |
| | | US 2019142222 A1 | 16-05-2019 |
| | | WO 2017211975 A1 | 14-12-2017 |
| DE 102014112251 A1 | 03-03-2016 | AU 2015308544 A1 | 16-03-2017 |
| | | CN 106572771 A | 19-04-2017 |
| | | DE 102014112251 A1 | 03-03-2016 |
| | | EP 3185734 A1 | 05-07-2017 |
| | | TW 201620431 A | 16-06-2016 |
| | | US 2017258273 A1 | 14-09-2017 |
| | | WO 2016030367 A1 | 03-03-2016 |

EPO FORM P0461

Für nähere Einzelheiten zu diesem Anhang : siehe Amtsblatt des Europäischen Patentamts, Nr.12/82